# EUROPÄISCHE PATENTSCHRIFT

(11) **EP 1 633 592 B1**
(45) Veröffentlichungstag und Bekanntmachung des Hinweises auf die Patenterteilung: **02.04.2008**
(21) Anmeldenummer: 04729367.5
(22) Anmeldetag: 24.04.2004
(51) Int. Cl.: B60L 5/00, B60L 13/00, B60L 9/00

(54) **TRANSPORTSYSTEM**
TRANSPORT SYSTEM
SYSTEME DE TRANSPORT

(30) Priorität: 13.06.2003 DE 10326614
(43) Veröffentlichungstag der Anmeldung: 15.03.2006
(73) Patentinhaber: Dürr Systems GmbH, 70435 Stuttgart (DE)
(72) Erfinder: LINDIG, Erik, 65779 Kelkheim (DE)
(74) Vertreter: Hörner, Andreas
(86) Internationale Anmeldenummer: PCT/EP2004/004351
(87) Internationale Veröffentlichungsnummer: WO 2004/110805

(56) Entgegenhaltungen:
- US-A- 5 293 308
- US-A- 5 839 554
- US-B1- 6 515 878

## Beschreibung

Die vorliegende Erfindung betrifft ein Transportsystem, insbesondere ein schienengebundenes Transportsystem, beispielsweise eine Einschienenhängebahn, das ein Leitersystem, das mindestens einen Versorgungsleiter umfaßt, welcher mit einer Energiequelle verbunden ist, mindestens einen relativ zu dem Leitersystem längs eines Fahrwegs beweglichen Transportwagen und mindestens eine Einrichtung zur berührungslosen Übertragung von Energie von dem Leitersystem zu dem Transportwagen umfaßt.

Solche Transportsysteme sind aus dem Stand der Technik bekannt.

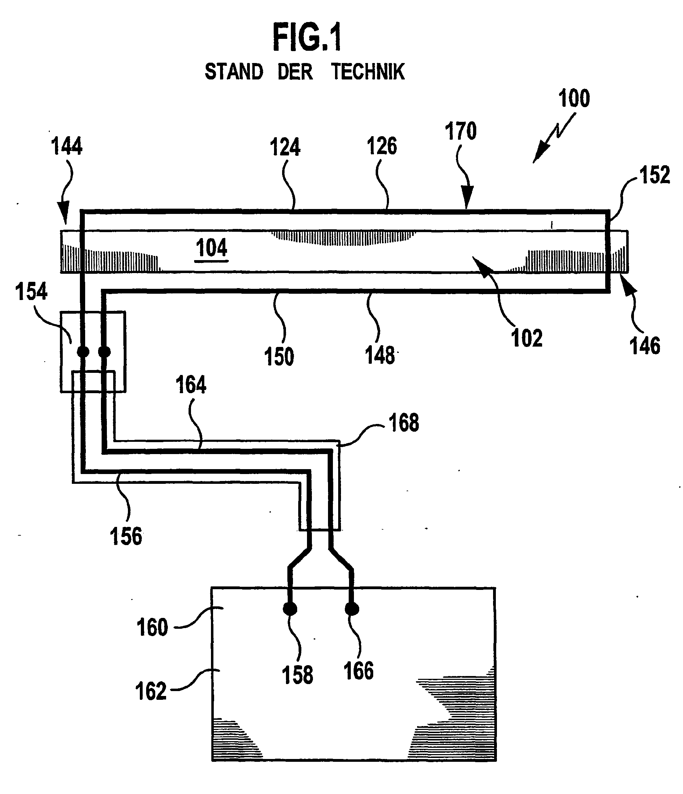

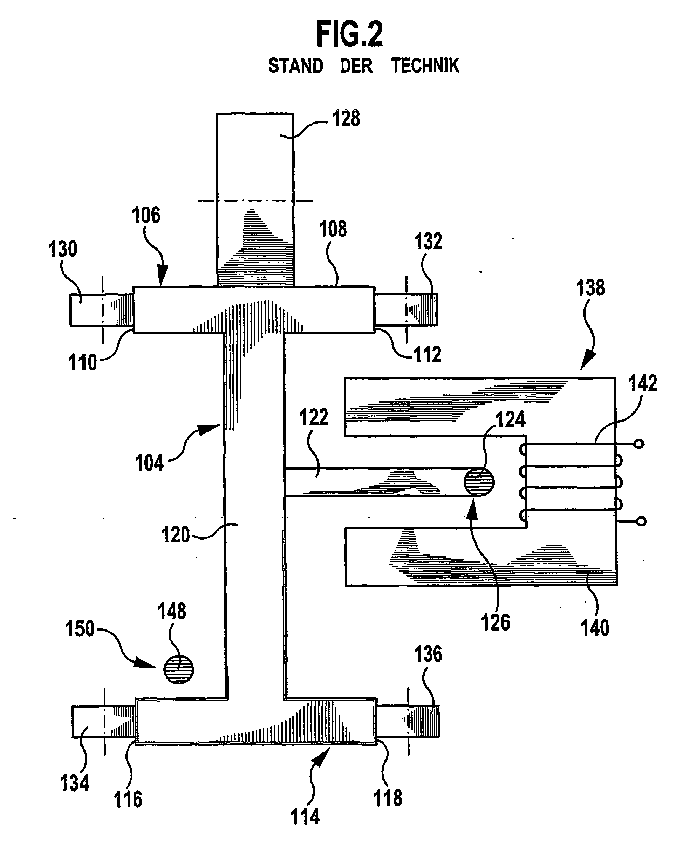

Insbesondere sind aus dem Stand der Technik solche Transportsysteme bekannt, bei denen das Leitersystem einen sich längs des Fahrwegs erstreckenden Versorgungsleiter und einen mit dem Versorgungsleiter in Reihe geschalteten Rückleiter umfaßt, welcher sich im wesentlichen parallel zu dem Versorgungsleiter längs des Fahrwegs zurück erstreckt. Ein solches Transportsystem ist in den Fig. 1 und 2 dargestellt. Das aus dem Versorgungsleiter und dem Rückleiter gebildete Leitersystem eines solchen Transportsystems weist aufgrund des vergleichsweise großen Abstands zwischen dem Versorgungsleiter und dem Rückleiter eine hohe Induktivität auf. Wird der Rückleiter nahe an einer Laufschiene des Transportsystems zurückgeführt, so werden in der Laufschiene Wirbelströme induziert, welche Strom-Wärme-Verluste zur Folge haben.

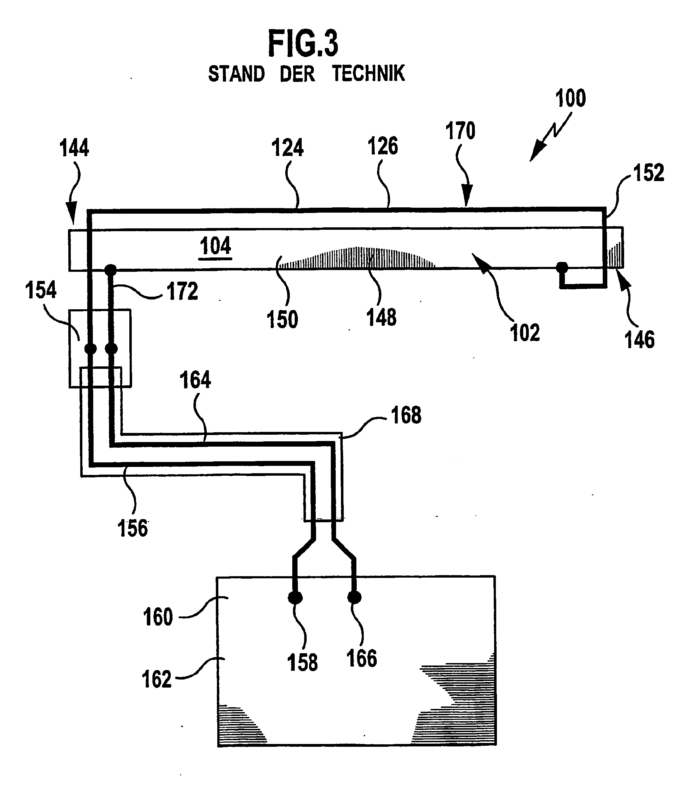

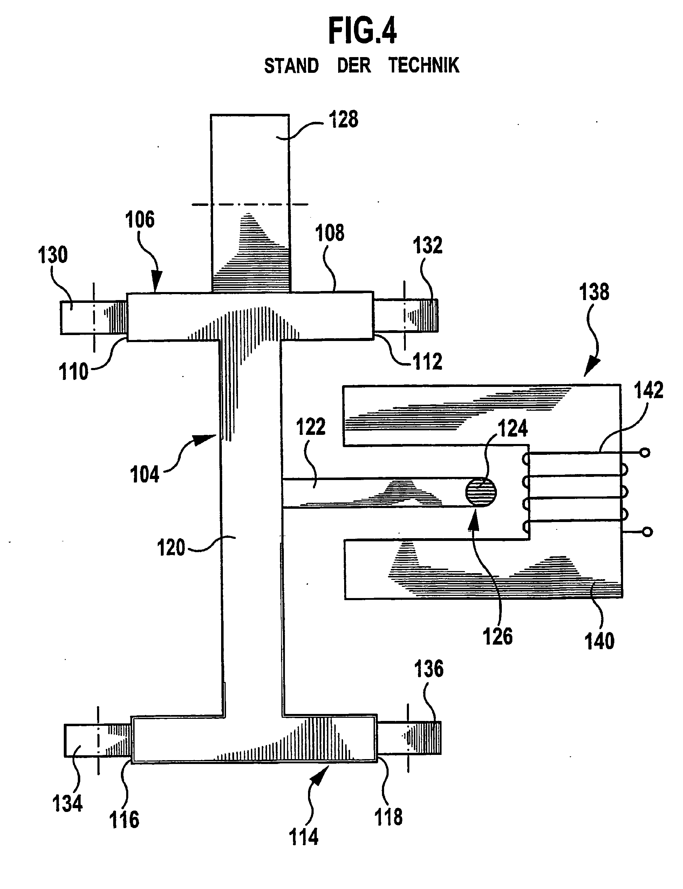

Bei anderen, aus dem Stand der Technik bekannten Transportsystemen wird die Laufschiene des Transportsystems selbst als Rückleiter verwendet. Ein solches Transportsystem ist in den Fig. 3 und 4 dargestellt. Bei solchen Transportsystemen ist der in der Laufschiene fließende Strom gleich groß wie der Strom im Versorgungsleiter, was entsprechend hohe Strom-Wärme-Verluste in der Laufschiene zur Folge hat.

Die US 5 293 308 A offenbart ein Transportsystem mit den Merkmalen des Oberbegriffs von Anspruch 1.

Der vorliegenden Erfindung liegt die Aufgabe zugrunde, ein Transportsystem der eingangs genannten Art zu schaffen, bei dem die stationäre Leiterschleife eine möglichst geringe Induktivität aufweist und Ohmsche Verluste möglichst gering gehalten werden.

Diese Aufgabe wird durch ein Transportsystem nach Anspruch 1 gelöst.

Durch das Vorhandensein des Induktionsleiters, welcher in der Nähe des Versorgungsleiters angeordnet ist, wird die Induktivität der den Versorgungsleiter umfassenden stationären Leiterschleife bei dem erfindungsgemäßen Transportsystem vermindert. Ein parallel zu dem Versorgungsleiter längs des Fahrwegs des Transportsystems zurückgeführter Rückleiter ist bei dem erfindungsgemäßen Transportsystem nicht erforderlich, so dass das erfindungsgemäße Transportsystem mit einem geringeren Material- und Montageaufwand auskommt.

Ferner ist der in dem Induktionsleiter induzierte Strom stets kleiner als der dem Versorgungsleiter eingeprägte Strom, wodurch die im Induktionsleiter entstehenden Strom-Wärme-Verluste verringert werden.

Bei einer besonderen Ausgestaltung des erfindungsgemäßen Transportsystems ist vorgesehen, dass zwei Endbereiche des Induktionsleiters mittels eines Kurzschlussleiters miteinander kurzgeschlossen sind. Dadurch ist ein Kurzschluss der Endbereiche des Induktionsleiters miteinander auch dann gewährleistet, wenn der Induktionsleiter nicht ringförmig geschlossen ausgebildet ist.

Ferner kann vorgesehen sein, dass der Versorgungsleiter einen ersten Versorgungsleiter-Zuführabschnitt umfasst, der den Versorgungsleiter-Fahrwegsabschnitt mit einem ersten Ausgang der Energiequelle verbindet.

In diesem Fall umfasst der Kurzschlussleiter vorzugsweise einen ersten Kurzschlussleiterabschnitt, der zumindest abschnittsweise längs des ersten Versorgungsleiter-Zuführabschnitts verläuft, um die Induktivität der Leiteranordnung zu vermindern.

Eine besonders geringe Induktivität der Leiteranordnung wird erzielt, wenn der erste Versorgungsleiter-Zuführabschnitt und der erste Kurzschlussleiterabschnitt zumindest abschnittsweise zusammen in einem mehradrigen Zuleitungskabel geführt sind.

Besonders günstig ist es, wenn der erste Versorgungsleiter-Zuführabschnitt in mindestens zwei Adern des mehradrigen Zuleitungskabels geführt ist und der erste Kurzschlussleiterabschnitt in mindestens einer Ader des mehradrigen Zuleitungskabel geführt ist, welche - in der Umfangsrichtung des Zuleitungskabels gesehen - zwischen den zwei Adern angeordnet ist, in welchen der erste Versorgungsleiter-Zuführabschnitt geführt ist.

Ferner ist es günstig, wenn der erste Kurzschlußleiterabschnitt in mindestens zwei Adern des mehradrigen Zuleitungskabels geführt ist und der erste Versorgungsleiter-Zuführabschnitt in mindestens einer Ader des mehradrigen Zuleitungskabels geführt ist, welche - in der Umfangsrichtung des Zuleitungskabels gesehen - zwischen den zwei Adern angeordnet ist, in welchen der erste Kurzschlußleiterabschnitt geführt ist.

Bei einer bevorzugten Ausgestaltung des erfindungsgemäßen Transportsystems ist ferner vorgesehen, daß der Versorgungsleiter einen zweiten Versorgungsleiter-Zuführabschnitt umfaßt, der den Versorgungsleiter-Fahrwegsabschnitt mit einem zweiten Ausgang der Energiequelle verbindet.

In diesem Fall umfaßt der Kurzschlußleiter vorzugsweise einen zweiten Kurzschlußleiterabschnitt, der zumindest abschnittsweise längs des zweiten Versorgungsleiter-Zuführabschnitts verläuft, um die Induktivität der Leiteranordnung zu verringern.

Die Induktivität der Leiteranordnung wird besonders gering, wenn der zweite Versorgungsleiter-Zuführabschnitt und der zweite Kurzschlußleiterabschnitt zumindest abschnittsweise zusammen in einem mehradrigen Zuleitungskabel geführt sind.

Besonders günstig ist es, wenn der zweite Versorgungsleiter-Zuführabschnitt in mindestens zwei Adern des mehradrigen Zuleitungskabel geführt ist und der zweite Kurzschlußleiterabschnitt in mindestens einer Ader des mehradrigen Zuleitungskabels geführt ist, welche - in der Umfangsrichtung des Zuleitungskabels gesehen - zwischen den zwei Adern angeordnet ist, in welchen der zweite Versorgungsleiter-Zuführabschnitt geführt ist.

Ferner ist es günstig, wenn der zweite Kurzschlußleiterabschnitt in mindestens zwei Adern des mehradrigen Zuleitungskabels geführt ist und der zweite Versorgungsleiter-Zuführabschnitt in mindestens einer Ader des mehradrigen Zuleitungskabels geführt ist, welche - in der Umfangsrichtung des Zuleitungskabels gesehen - zwischen den zwei Adern angeordnet ist, in welchen der zweite Kurzschlußleiterabschnitt geführt ist.

Bei einer bevorzugten Ausgestaltung des erfindungsgemäßen Transportsystems ist vorgesehen, daß der erste Kurzschlußleiterabschnitt und der zweite Kurzschlußleiterabschnitt in der Nähe der Anschlußklemmen der Energiequelle miteinander verbunden sind.

Um die erforderliche Länge der Kurzschlußleiterabschnitte gering zu halten, kann alternativ hierzu auch vorgesehen sein, daß der Kurzschlußleiter einen ersten Kurzschlußleiterabschnitt und einen zweiten Kurzschlußleiterabschnitt umfaßt, welche an einer von der Energiequelle entfernten Kontaktstelle miteinander verbunden sind.

In diesem Fall ist vorzugsweise vorgesehen, daß der Versorgungsleiter einen ersten Versorgungsleiter-Zuführabschnitt mit einem Unterabschnitt umfaßt, der vom Bereich der Kontaktstelle zu einem ersten Ausgang der Energiequelle verläuft.

Ferner ist es in diesem Fall von Vorteil, wenn der Versorgungsleiter einen zweiten Versorgungsleiter-Zuführabschnitt mit einem Unterabschnitt umfaßt, der von der Kontaktstelle zu einem zweiten Ausgang der Energiequelle verläuft.

Auf diese Weise kann die Induktivität der die beiden Versorgungsleiter-Zuführabschnitte umfassenden Leiteranordnung vermindert werden.

Besonders gering wird die Induktivität dieser Leiteranordnung, wenn der Unterabschnitt des ersten Versorgungsleiter-Zuführabschnitts und der Unterabschnitt des zweiten Versorgungsleiter-Zuführabschnitts zumindest abschnittsweise zusammen in einem mehradrigen Zuleitungskabel geführt sind.

Der Induktionsleiter des erfindungsgemäßen Transportsystems kann beispielsweise einstückig ausgebildet sein.

Alternativ hierzu kann jedoch auch vorgesehen sein, daß der Induktionsleiter mehrere Induktionsleiterabschnitte umfaßt, die jeweils mindestens zwei Endbereiche aufweisen, wobei mindestens ein Endbereich eines ersten Induktionsleiterabschnitts mit mindestens einem Endbereich eines zweiten Induktionsleiterabschnitts elektrisch leitend verbunden ist. Eine solche Ausführungsform des Induktionsleiters ist insbesondere für ein Transportsystem mit einem ausgedehnten und/oder verzweigten Fahrweg geeignet.

Dabei können der mindestens eine Endbereich des ersten Induktionsleiterabschnitts und der mindestens eine Endbereich des zweiten Induktionsleiterabschnitts über einen separaten Verbindungsleiter elektrisch leitend miteinander verbunden sein.

Alternativ oder ergänzend hierzu kann jedoch auch vorgesehen sein, daß der mindestens eine Endbereich des ersten Induktionsleiterabschnitts mit dem mindestens einen Endbereich des zweiten Induktionsleiterabschnitts über eine elektrisch leitende Halterung elektrisch leitend verbunden ist.

Eine solche elektrisch leitende Halterung kann insbesondere durch eine den Fahrweg tragende Metallkonstruktion gebildet sein.

Bei einer bevorzugten Ausgestaltung des erfindungsgemäßen Transportsystems ist vorgesehen, daß jeder Endbereich jedes Induktionsleiterabschnitts elektrisch leitend mit mindestens einem Endbereich desselben Induktionsleiterabschnitts oder eines anderen Induktionsleiterabschnitts verbunden ist.

Ferner ist vorzugsweise vorgesehen, daß der Induktionsleiter und der Versorgungsleiter des Transportsystems galvanisch voneinander getrennt sind. In diesem Falle wird also insbesondere der Induktionsleiter nicht als Rückleiter des Leitersystems des Transportsystems verwendet.

Bislang wurden noch keine näheren Angaben zur Ausgestaltung des Induktionsleiters des erfindungsgemäßen Transportsystems gemacht.

Grundsätzlich ist für die Herstellung des Induktionsleiters jedes Material geeignet, welches eine ausreichende elektrische Leitfähigkeit aufweist.

Vorzugsweise wird für den Induktionsleiter ein Material verwendet, welches nicht-ferromagnetisch ist.

Ferner ist vorzugsweise vorgesehen, daß der Induktionsleiter ein Element umfaßt, das zumindest abschnittsweise als ein Profilelement, das heißt ein sich in einer Längsrichtung erstreckendes Element, welches einen im wesentlichen konstanten Querschnitt aufweist, ausgebildet ist.

Bei besonders bevorzugten Ausgestaltungen des erfindungsgemäßen Transportsystems ist vorgesehen, daß das Profilelement zumindest abschnittsweise einen im wesentlichen U-förmigen Querschnitt oder einen im wesentlichen doppel-T-förmigen Querschnitt aufweist.

Insbesondere kann vorgesehen sein, daß der Versorgungsleiter des Leitersystems, vorzugsweise im wesentlichen mittig, zwischen den beiden Schenkeln eines im Querschnitt U-förmigen Profilelements angeordnet ist.

Ferner kann vorgesehen sein, daß der Induktionsleiter ein Element umfaßt, das zumindest abschnittsweise als eine Laufschiene ausgebildet ist, an welcher der Transportwagen des Transportsystems angeordnet ist. Bei dieser Ausgestaltung der Erfindung kann somit die Laufschiene des Transportsystems als deren Induktionsleiter verwendet werden, so daß es nicht erforderlich ist, zusätzlich zu der Laufschiene ein weiteres Element als Induktionsleiter vorzusehen.

Alternativ hierzu kann auch vorgesehen sein, daß das Transportsystem eine von dem Induktionsleiter verschiedene Laufschiene, an der Laufrollen des Transportwagens abrollen, und/oder eine von dem Induktionsleiter verschiedene Führungsschiene, an der Führungsrollen des Transportwagens abrollen, umfaßt.

Ferner kann vorzugsweise vorgesehen sein, daß der Induktionsleiter ein Element umfaßt, das zumindest abschnittsweise aus Aluminium oder einer Aluminiumlegierung gebildet ist.

Insbesondere kann der Induktionsleiter ein aus einem Aluminiumprofil oder aus einem Aluminiumlegierungsprofil gebildetes Element umfassen.

Insbesondere kann dieses Profilelement zugleich als Laufschiene des Transportsystems und/oder als Halterung für den Versorgungsleiter des Transportsystems dienen.

Bei einer bevorzugten Ausgestaltung des erfindungsgemäßen Transportsystems ist vorgesehen, daß das Leitersystem des Transportsystems keinen Rückleiter aufweist, wodurch ein erheblicher Material- und Montageaufwand gegenüber Transportsystemen mit Rückleiter eingespart werden kann.

Die Energiequelle des Transportsystems kann insbesondere einen Mittelfrequenzgenerator umfassen.

Insbesondere kann vorgesehen sein, daß der Mittelfrequenzgenerator einen mittelfrequenten Wechselstrom, beispielsweise im Frequenzbereich von ungefähr 15 kHz bis ungefähr 30 kHz, in den Versorgungsleiter einspeist.

Der Fahrweg des erfindungsgemäßen Transportsystems kann im wesentlichen geradlinig ausgebildet sein.

Alternativ hierzu ist es jedoch auch möglich, daß der Fahrweg gekrümmt ausgebildet ist und insbesondere mehrere, beispielsweise im wesentlichen viertelkreisförmige, Kurven aufweist.

Der Induktionsleiter des erfindungsgemäßen Transportsystems, welcher vorzugsweise im wesentlichen parallel zu dem Fahrweg des Transportsystems verläuft, ist in diesen Fällen ebenfalls vorzugsweise gekrümmt ausgebildet.

Durch die Krümmung des Fahrwegs und des Induktionsleiters ist es möglich, die Endbereiche des Induktionsleiters möglichst nahe aneinander anzuordnen, so daß der Kurzschlußleiter, welcher die Endbereiche des Induktionsleiters miteinander kurzschließt, möglichst kurz gehalten werden kann.

Ferner ist es auch möglich, daß der Fahrweg des erfindungsgemäßen Transportsystems sich verzweigt und so mehrere Fahrwegsabschnitte aufweist.

In diesem Fall ist vorzugsweise vorgesehen, daß jedem der Fahrwegsabschnitte jeweils ein Induktionsleiterabschnitt zugeordnet ist, wobei die Induktionsleiterabschnitte durch elektrisch leitende Verbindungsabschnitte so miteinander verbunden sind, daß sie in Reihe geschaltet sind, und wobei ein erster Endbereich eines ersten Induktionsleiterabschnitts und ein zweiter Endbereich eines zweiten Induktionsleiterabschnitts durch einen Kurzschlußleiter miteinander kurzgeschlossen sind.

Ferner ist in diesem Fall vorzugsweise vorgesehen, daß jedem der Fahrwegsabschnitte jeweils ein Versorgungsleiterabschnitt zugeordnet ist, wobei die Versorgungsleiterabschnitte durch elektrisch leitende Verbindungsabschnitte so miteinander verbunden sind, daß sie in derselben Reihenfolge in Reihe geschaltet sind wie die Induktionsleiterabschnitte, welche jeweils demselben Fahrwegsabschnitt zugeordnet sind.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung eines Transportsystems nach dem Stand der Technik, dessen Leitersystem einen sich längs eines Fahrwegs des Transportsystems erstreckenden Versorgungsleiter und einen sich längs des Fahrwegs erstreckenden Rückleiter umfaßt;
- Fig. 2: einen schematischen Querschnitt durch den Fahrweg des Transportsystems aus Fig. 1 und eine Energieübertragungseinheit eines an dem Fahrweg angeordneten Transportwagens;
- Fig. 3: eine schematische Darstellung eines weiteren Transportsystems nach dem Stand der Technik, dessen Leitersystem einen sich längs eines Fahrwegs des Transportsystems erstreckenden Versorgungsleiter und eine als Rückleiter dienende Laufschiene umfaßt;
- Fig. 4: einen schematischen Querschnitt durch den Fahrweg des Transportsystems aus Fig. 3 und durch eine Energieübertragungseinheit eines an dem Fahrweg angeordneten Transportwagens;
- Fig. 5: eine schematische Darstellung eines erfindungsgemäßen Transportsystems, dessen Leitersystem einen sich längs eines Fahrwegs des Transportsystems erstreckenden Versorgungsleiter umfaßt und das einen benachbart zu dem Versorgungsleiter angeordneten Induktionsleiter umfaßt, dessen Endbereiche miteinander kurzgeschlossen sind;
- Fig. 6: einen schematischen Querschnitt durch den Fahrweg des Transportsystems aus Fig. 5 und durch eine Energieübertragungseinheit eines an dem Fahrweg angeordneten Transportwagens;
- Fig. 7: einen schematischen Querschnitt durch ein mehradriges Zuleitungskabel des Transportsystems aus Fig. 5;
- Fig. 8: eine schematische Darstellung einer zweiten Ausführungsform des erfindungsgemäßen Transportsystems, dessen Induktionsleiter mehrere Induktionsleiterabschnitte umfaßt, die elektrisch leitend miteinander verbunden sind;
- Fig. 9: eine schematische Darstellung einer dritten Ausführungsform des erfindungsgemäßen Transportsystems, dessen Induktionsleiter einen viertelkreisförmigen Abschnitt umfaßt;
- Fig. 10: eine schematische Darstellung einer vierten Ausführungsform des erfindungsgemäßen Transportsystems, dessen Induktionsleiter zwei viertelkreisförmige Abschnitte umfaßt;
- Fig. 11: eine schematische Darstellung einer fünften Ausführungsform des erfindungsgemäßen Transportsystems, dessen Induktionsleiter zwei viertelkreisförmige Abschnitte umfaßt, wobei die Endbereiche des Induktionsleiters durch zwei Kurzschlußleiterabschnitte miteinander verbunden sind, die an einer von einem Generator des Transportsystems entfernten Kontaktstelle miteinander verbunden sind;
- Fig. 12: eine schematische Darstellung einer sechsten Ausführungsform des erfindungsgemäßen Transportsystems, welche einen ringförmig geschlossenen Induktionsleiter umfaßt;
- Fig. 13: eine schematische Darstellung einer siebten Ausführungsform des erfindungsgemäßen Transportsystems, welche eine Weiche und eine Abzweigstrecke umfaßt; und
- Fig. 14: einen schematischen Querschnitt durch den Induktionsleiter, den Versorgungsleiter und eine Energieübertragungseinheit einer achten Ausführungsform des erfindungsgemäßen Transportsystems.

Gleiche oder funktional äquivalente Elemente sind in allen Figuren mit denselben Bezugszeichen bezeichnet.

Ein in den Fig. 1 und 2 dargestelltes, als Ganzes mit 100 bezeichnetes Transportsystem nach dem Stand der Technik, das insbesondere als Einschienenhängebahn ausgebildet ist, umfaßt einen linearen Fahrweg 102 mit einer sich längs des Fahrwegs erstreckenden Laufschiene 104.

Wie am besten aus Fig. 2 zu ersehen ist, weist die Laufschiene 104 einen im wesentlichen doppel-T-förmigen Querschnitt auf und umfaßt einen oberen Gurt 106 mit einer oberen, im wesentlichen ebenen Lauffläche 108 und mit zwei seitlichen Führungsflächen 110 und 112 sowie einen unteren Gurt 114 mit zwei seitlichen Führungsflächen 116 und 118.

Beide Gurte sind an ihren einander gegenüberliegenden Seiten über einen vertikalen Steg 120 miteinander verbunden, dessen Wände eben sind und parallel zur Laufschienenlängsrichtung verlaufen.

Zwischen den beiden Gurten 106 und 114 steht von einer Seitenwand des Steges 120 ein aus einem elektrisch isolierenden Material gebildeter Versorgungsleiterträger 122 ab, welcher an seinem dem Steg 120 abgewandten Ende einen Versorgungsleiter-Fahrwegsabschnitt 124 eines Versorgungsleiters 126 trägt.

Auf der oberen Lauffläche 108 der Laufschiene 104 rollt eine Tragrolle 128 eines Transportwagens des Transportsystems 100 ab.

Von diesem Transportwagen sind in Fig. 2 außer der Tragrolle 128 nur seitliche Führungsrollen 130, 132, 134 und 136, die an den seitlichen Führungsflächen 110, 112, 116 bzw. 118 abrollen, sowie eine Energieübertragungseinheit 138 dargestellt, welche beispielsweise einen Stromabnehmer 140 umfaßt, der als U-förmiger Ferritkern gestaltet ist und auf dem eine Leiterwicklung 142 angeordnet ist, die mit einer (in Fig. 2 nicht dargestellten) Stromabnehmer-Elektronikschaltung zur Wandlung eines in der Leiterwicklung 142 induzierten Wechselstromes in eine Gleichspannung verbunden ist.

Der Versorgungsleiter-Fahrwegsabschnitt 124 des Versorgungsleiters 126 taucht in den U-förmigen Stromabnehmer 140 der Energieübertragungseinheit 138 ein, ohne denselben zu berühren.

Wie am besten aus Fig. 1 zu ersehen ist, verläuft der Versorgungsleiter-Fahrwegsabschnitt 124 von einem ersten Endbereich 144 der Laufschiene 104 parallel zur Laufschiene 104 zu einem zweiten Endbereich 146 der Laufschiene 104, von welchem ein Rückleiter-Fahrwegsabschnitt 148 eines als Ganzes mit 150 bezeichneten Rückleiters längs der Laufschiene 104 zu dem ersten Endbereich 144 der Laufschiene 104 zurückführt. Im zweiten Endbereich 146 sind der Versorgungsleiter 126 und der Rückleiter 150 über einen Verbindungsabschnitt 152 miteinander verbunden.

Wie aus Fig. 2 zu ersehen ist, ist der Rückleiter-Fahrwegsabschnitt 148 des Rückleiters 150 auf der dem Versorgungsleiter-Fahrwegsabschnitt 124 abgewandten Seite der Laufschiene 104 angeordnet.

Alternativ hierzu könnte jedoch auch vorgesehen sein, daß der Rückleiter-Fahrwegsabschnitt 148 auf derselben Seite der Laufschiene 104 angeordnet ist wie der Versorgungsleiter-Fahrwegsabschnitt 124.

Das im ersten Endbereich 144 der Laufschiene 104 liegende Ende des Versorgungslelter-Fahrwegsabschnitt 124 ist in einen Anschlußkasten 154 hineingeführt und dort an einen Versorgungsleiter-Zuführabschnitt 156 angeschlossen, welcher den Versorgungsleiter-Fahrwegsabschnitt 124 mit einem ersten Ausgang 158 eines als Energiequelle 160 des Transportsystems 100 dienenden Mittelfrequenzgenerators 162 verbindet.

Das im ersten Endbereich 144 der Laufschiene 104 liegende Ende des Rückleiter-Fahrwegsabschnitt 148 ist ebenfalls in den Anschlußkasten 154 hineingeführt und dort an einen Rückleiter-Zuführabschnitt 164 angeschlossen, welcher den Rückleiter-Fahrwegsabschnitt 148 mit einem zweiten Ausgang 166 des Mittelfrequenzgenerators 162 verbindet.

Der Versorgungsleiter-Zuführabschnitt 156 und der Rückleiter-Zuführabschnitt 164 sind zusammen in einem mehradrigen Zuleitungskabel 168 geführt.

Wird mittels des Mittelfrequenzgenerators 162 in den Versorgungsleiter 126 und den Rückleiter 150 ein mittelfrequenter Wechselstrom (meist im Bereich von ungefähr 15 kHz bis ungefähr 30 kHz) eingespeist, so erzeugt dieser mittelfrequente Wechselstrom einen entsprechend zeitlich variierenden magnetischen Fluß in dem Stromabnehmer 140 der Energieübertragungseinheit 138 des Transportwagens, so daß in der Leiterwicklung 142 ein Wechselstrom induziert und mit der (nicht dargestellten) Stromabnehmer-Elektronikschaltung in eine Gleichspannung für Antriebs- und Steuerungszwecke des Transportwagens gewandelt werden kann.

Das aus dem Versorgungsleiter 126 und dem Rückleiter 150 gebildete Leitersystem 170 dieses Transportsystems 100 weist aufgrund des vergleichsweise großen Abstands zwischen dem Versorgungsleiter 126 und dem Rückleiter 150 eine hohe Induktivität auf. Zwar kann der Rückleiter 150, wie bereits angesprochen, auch auf derselben Seite der Laufschiene 104 angeordnet sein wie der Versorgungsleiter 126, doch ist durch die Größe des U-förmigen Stromabnehmers 140 ein Mindestabstand zwischen dem Versorgungsleiter 126 und dem Rückleiter 150 vorgegeben.

Wird der Rückleiter 150 nahe an der Laufschiene 104, die insbesondere aus einem Aluminiumprofil gebildet sein kann, zurückgeführt, so verringert sich dessen Induktivität. Durch die enge Führung an der Laufschiene 104 werden aber in der Laufschiene 104 Wirbelströme induziert, welche Strom-Wärme-Verluste zur Folge haben.

Eine in den Fig. 3 und 4 dargestellte weitere Ausführungsform eines Transportsystems 100 gemäß dem Stand der Technik unterscheidet sich von der vorstehend beschriebenen Ausführungsform eines Transportsystems 100 lediglich dadurch, daß als Rückleiter-Fahrwegsabschnitt 148 die Laufschiene 104 selbst benutzt wird. Hierzu wird das Ende des Versorgungsleiter-Fahrwegsabschnitts 124 im zweiten Endbereich 146 der Laufschiene 104 über den Verbindungsabschnitt 152 mit der Laufschiene 104 verbunden.

Ferner wird der erste Endbereich 144 der Laufschiene 104 über einen Verbindungsabschnitt 172, der in den Anschlußkasten 154 hineingeführt ist, an den Rückleiter-Zuführabschnitt 164 angeschlossen.

Bei dieser Ausführungsform wird also für die Rückleitung der stationären Leiterschleife die nicht isolierte Laufschiene 104, die insbesondere als Aluminiumprofil ausgebildet sein kann, verwendet.

Der Strom in der Laufschiene 104 ist gleich groß wie der Strom im Versorgungsleiter 126.

Im übrigen stimmt die in den Fig. 3 und 4 dargestellte Ausführungsform eines Transportsystems 100 gemäß dem Stand der Technik hinsichtlich Aufbau und Funktion mit dem in den Fig. 1 und 2 dargestellten Transportsystem 100 überein, auf dessen vorstehende Beschreibung insoweit Bezug genommen wird.

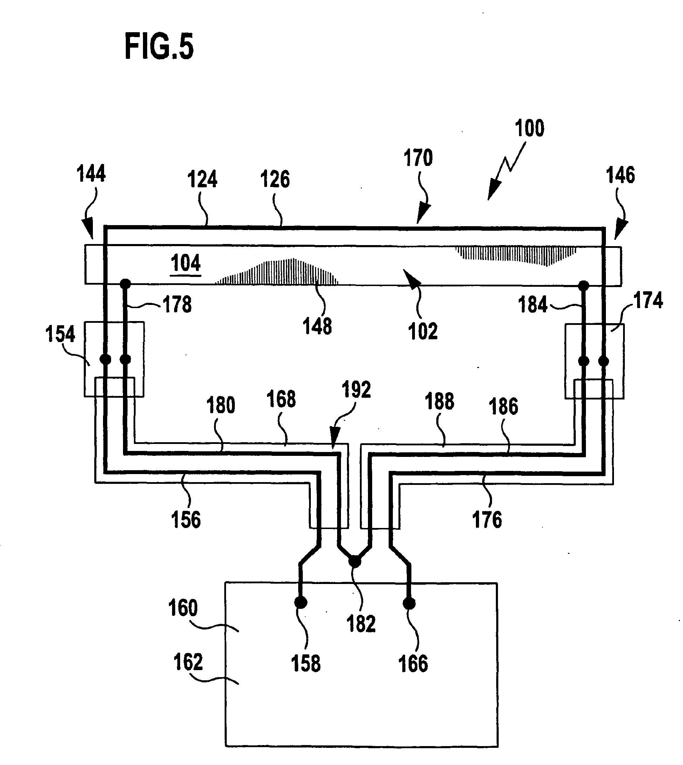

Eine in den Fig. 5 bis 7 dargestellte erste Ausführungsform eines erfindungsgemäßen Transportsystems 100 unterscheidet sich von dem in den Fig. 1 und 2 dargestellten Transportsystem 100 dadurch, daß kein Rückleiter 150 vorhanden ist.

Vielmehr ist der Versorgungsleiter-Fahrwegsabschnitt 124 im zweiten Endbereich 146 der Fahrschiene 104 in einen zweiten Anschlußkasten 174 hineingeführt und dort an einen zweiten Versorgungsleiter-Zuführabschnitt 176 angeschlossen, welcher den Versorgungsleiter-Fahrwegsabschnitt 124 mit dem zweiten Ausgang 166 des als Energiequelle 160 des Transportsystems 100 dienenden Mittelfrequenzgenerators 162 verbindet.

Im ersten Endbereich 144 der Laufschiene 104 ist der Versorgungsleiter-Fahrwegsabschnitt 124 in einen ersten Anschlußkasten 154 hineingeführt und dort an einen ersten Versorgungsleiter-Zuführabschnitt 156 angeschlossen, welcher den Versorgungsleiter-Fahrwegsabschnitt 124 mit dem ersten Ausgang 158 des Mittelfrequenzgenerators 162 verbindet.

Die Laufschiene 104 ist bei dieser Ausführungsform galvanisch von dem Versorgungsleiter 126 getrennt.

Der erste Endbereich 144 der Laufschiene 104 ist über einen ersten Verbindungsabschnitt 178, der in den ersten Anschlußkasten 154 hineingeführt ist, an einen ersten Kurzschlußleiterabschnitt 180 angeschlossen, welcher den ersten Verbindungsabschnitt 178 mit einer in der Nähe der Anschlußklemmen des Mittelfrequenzgenerators 162 angeordneten Kontaktstelle 182 verbindet.

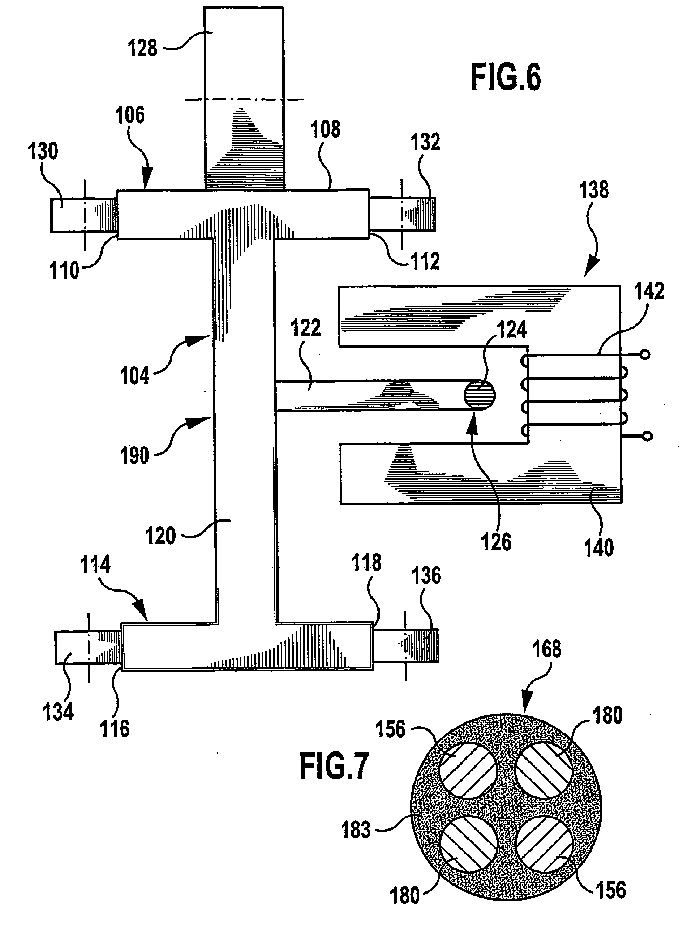

Ein Großteil des ersten Kurzschlußleiterabschnitts 180 ist zusammen mit einem Großteil des ersten Verbindungsleiter-Zuführabschnitts 156 in einem mehradrigen ersten Zuleitungskabel 168 geführt, dessen Querschnitt schematisch in Fig. 7 dargestellt ist.

Wie aus dem Querschnitt der Fig. 7 zu ersehen ist, umfaßt der in dem ersten Zuleitungskabel 168 geführte erste Verbindungsleiter-Zuführabschnitt 156 zwei Adern, die einander in dem mehradrigen ersten Zuleitungskabel 168 diametral gegenüberliegen.

Ferner umfaßt der in dem ersten Zuleitungskabel 168 geführte erste Kurzschlußleiterabschnitt 180 zwei Adern, die einander ebenfalls in dem ersten Zuleitungskabel 168 diametral gegenüberliegen und - in der Umfangsrichtung des ersten Zuleitungskabels 168 gesehen - jeweils zwischen zwei Adern des ersten Verbindungsleiter-Zuführabschnitts 156 angeordnet sind, so daß in der Umfangsrichtung des ersten Zuleitungskabels 168 die Adern des ersten Versorgungsleiter-Zuführabschnitts 156 und des ersten Kurzschlußleiterabschnitts 180 jeweils abwechselnd aufeinanderfolgen.

Alle Adern des ersten Zuleitungskabels 168 sind in ein Isolationsmaterial 182 eingebettet.

Durch die vorstehend beschriebene Anordnung der Adern des ersten Verbindungsleiter-Zuführabschnitts 156 und des ersten Kurzschlußleiterabschnitts 180 in dem ersten Zuleitungskabel 168 wird erreicht, daß das erste Zuleitungskabel 168 eine besonders geringe Induktivität aufweist.

Wie aus Fig. 5 zu ersehen ist, ist der zweite Endbereich 146 der Laufschiene 104 über einen zweiten Verbindungsabschnitt 184, der in den zweiten Anschlußkasten 174 hineingeführt ist, an einen zweiten Kurzschlußleiterabschnitt 186 angeschlossen, welcher den zweiten Verbindungsabschnitt 184 mit der in der Nähe der Anschlußklemmen des Mittelfrequenzgenerators 162 angeordneten Kontaktstelle 182 verbindet.

Ein Großteil des zweiten Kurzschlußleiterabschnitts 186 ist zusammen mit einem Großteil des zweiten Versorgungsleiter-Zuführabschnitts 156 in einem mehradrigen zweiten Zuleitungskabel 188 geführt, das ebenso aufgebaut ist wie das vorstehend beschriebene und in Fig. 7 dargestellte erste Zuleitungskabel 168.

Über den ersten Verbindungsabschnitt 178, den ersten Kurzschlußleiterabschnitt 180, die Kontaktstelle 182, den zweiten Kurzschlußleiterabschnitt 186 und den zweiten Verbindungsabschnitt 184 sind somit der erste Endbereich 144 und der zweite Endbereich 146 der Laufschiene 104 miteinander kurzgeschlossen.

In diesem kurzgeschlossenen Stromkreislauf fließt ein Induktionsstrom, der durch den Strom im Versorgungsleiter 126, das heißt in dessen Versorgungsleiter-Fahrwegsabschnitt 124 und in dessen Versorgungsleiter-Zuführabschnitten 156 und 176, in der Laufschiene 104 und den Kurzschlußleiterabschnitten 180, 186 induziert wird.

Die Laufschiene 104 bildet somit einen Induktionsleiter 190, dessen Endbereiche 144 und 146 über einen Kurzschlußleiter 192, der den ersten Kurzschlußleiterabschnitt 180, den zweiten Kurzschlußlelterabschnitt 186 und die Kontaktsteile 182 umfaßt, miteinander kurzgeschlossen sind.

Bei dieser Leiteranordnung nimmt die Induktivität des Versorgungsleiters 126, in den der mittelfrequente Strom von dem Mittelfrequenzgenerator 162 eingespeist wird, ein Minimum an.

Die Laufschiene 104 ist aus einem elektrisch leitfähigen Material gebildet.

Ferner ist die Laufschiene 104 vorzugsweise aus einem nicht-ferromagnetischen Material gebildet.

Insbesondere kann vorgesehen sein, daß die Laufschiene 104 aus Aluminium oder einer Aluminiumlegierung gebildet ist.

Im übrigen stimmt die in den Fig. 5 bis 7 dargestellte erste Ausführungsform eines erfindungsgemäßen Transportsystems 100 hinsichtlich Aufbau und Funktion mit dem in den Fig. 1 und 2 dargestellten Transportsystem überein, auf dessen vorstehende Beschreibung insoweit Bezug genommen wird.

Gegenüber dem in den Fig. 1 und 2 dargestellten Transportsystem 100 bietet das erfindungsgemäße Transportsystem 100 den Vorteil, daß der Rückleiter 150 des Leitersystems 170 entfällt und somit nicht in der Nähe der Laufschiene 104 und/oder in der Nähe des Versorgungsleiters 126 längs des Fahrwegs 102 zurückgeführt werden muß, um die Induktivität des Rückleiters zu verringern.

Durch den Wegfall des Rückleiters 150 entstehen keine zusätzlichen Verluste in der Laufschiene 104 durch darin aufgrund des Magnetfeldes des Rückleiters 150 induzierte Wirbelströme.

Die in den Fig. 5 bis 7 dargestellte Ausführungsform eines Transportsystems 100 zeichnet sich gegenüber dem in den Fig. 1 und 2 dargestellten Transportsystem 100 somit durch einen geringeren Material- und Montageaufwand aus, da keine Verlegung eines Rückleiters erforderlich ist. Ferner weist die stationäre Leiterschleife des in den Fig. 5 bis 7 dargestellten Transportsystems 100 eine niedrigere Induktivität auf als bei dem in den Fig. 1 und 2 dargestellten Transportsystem 100.

Gegenüber dem in den Fig. 3 und 4 dargestellten Transportsystem 100 weist die in den Fig. 5 bis 7 dargestellte Ausführungsform eines erfindungsgemäßen Transportsystems 100 den Vorteil auf, daß der in der kurzgeschlossenen Laufschiene 104 induzierte Strom stets kleiner ist als der von dem Mittelfrequenzgenerator 162 eingeprägte Strom und somit stets kleiner als der Strom, der bei dem in den Fig. 3 und 4 dargestellten Transportsystem 100 durch die Laufschiene 104, die dort als Rückleiter 150 verwendet wird, fließt. Dadurch sind die in der Laufschiene 104 entstehenden Strom-Wärme-Verluste bei der in den Fig. 5 bis 7 dargestellten erfindungsgemäßen Ausführungsform kleiner als bei dem in den Fig. 3 und 4 dargestellten Transportsystem 100.

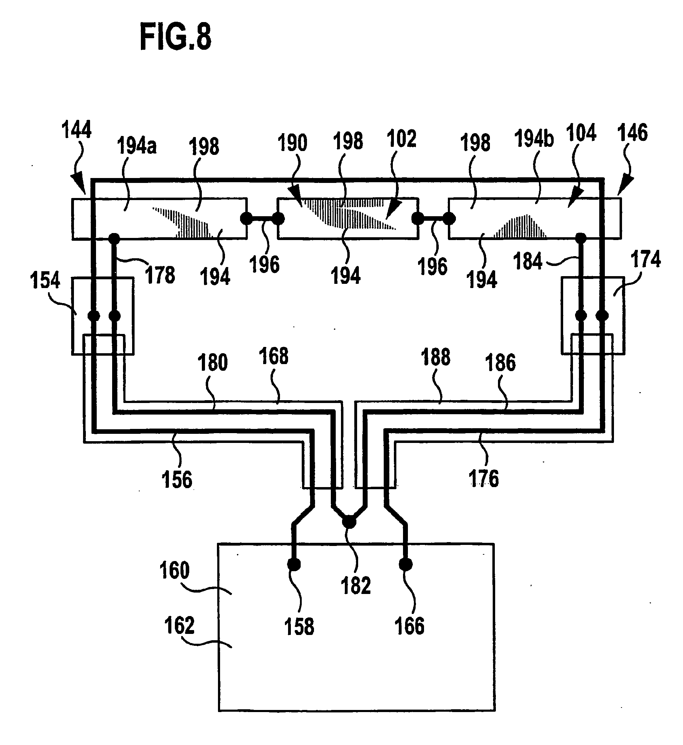

Eine in Fig. 8 dargestellte zweite Ausführungsform eines erfindungsgemäßen Transportsystems 100 unterscheidet sich von der in den Fig. 5 bis 7 dargestellten ersten Ausführungsform lediglich dadurch, daß die Laufschiene 104 nicht einstückig ausgebildet ist, sondern mehrere Laufschienenabschnitte 194 umfaßt, die längs des Fahrwegs 102 aufeinanderfolgen, wobei aufeinanderfolgende Laufschienenabschnitte 194 jeweils elektrisch leitend miteinander verbunden sind.

Diese elektrisch leitende Verbindung aufeinanderfolgender Laufschienenabschnitte 194 ist in Fig. 8 durch Verbindungsleitungen 196 dargestellt.

Die elektrisch leitende Verbindung der Laufschienenabschnitte 194 untereinander kann durch separate Verbindungsleitungen realisiert sein.

Alternativ oder ergänzend hierzu ist es jedoch auch möglich, daß die elektrisch leitende Verbindung zwischen den aufeinanderfolgenden Laufschienenabschnitten 194 durch eine elektrisch leitende Halterung realisiert ist, an welcher beide der jeweils elektrisch leitend miteinander zu verbindenden Laufschienenabschnitte 194 gehalten sind.

Eine solche Halterung kann insbesondere durch eine den Fahrweg 102 tragende Stahlkonstruktion gebildet sein.

Wie aus Fig. 8 zu ersehen ist, ist der den ersten Endbereich 144 der Laufschiene 104 beinhaltende erste Laufschienenabschnitt 194a über den ersten Verbindungsabschnitt 178 an den ersten Kurzschlußleiterabschnitt 180 angeschlossen, während der den zweiten Endbereich 146 der Laufschiene 104 beinhaltende letzte Laufschienenabschnitt 194b über den zweiten Verbindungsabschnitt 184 an den zweiten Kurzschlußleiterabschnitt 186 angeschlossen ist.

Bei dieser Ausführungsform bilden somit die Laufschienenabschnitte 194 jeweils einen Induktionsleiterabschnitt 198, und die Induktionsleiterabschnitte 198 bilden zusammen mit den die Induktionsleiterabschnitte 198 untereinander verbindenden Verbindungsleitungen 196 den Induktionsleiter 190 des Transportsystems 100.

Im übrigen stimmt die in Fig. 8 dargestellte zweite Ausführungsform eines Transportsystems 100 hinsichtlich Aufbau und Funktion mit der in den Fig. 5 bis 7 dargestellten ersten Ausführungsform überein, auf deren vorstehende Beschreibung insoweit Bezug genommen wird.

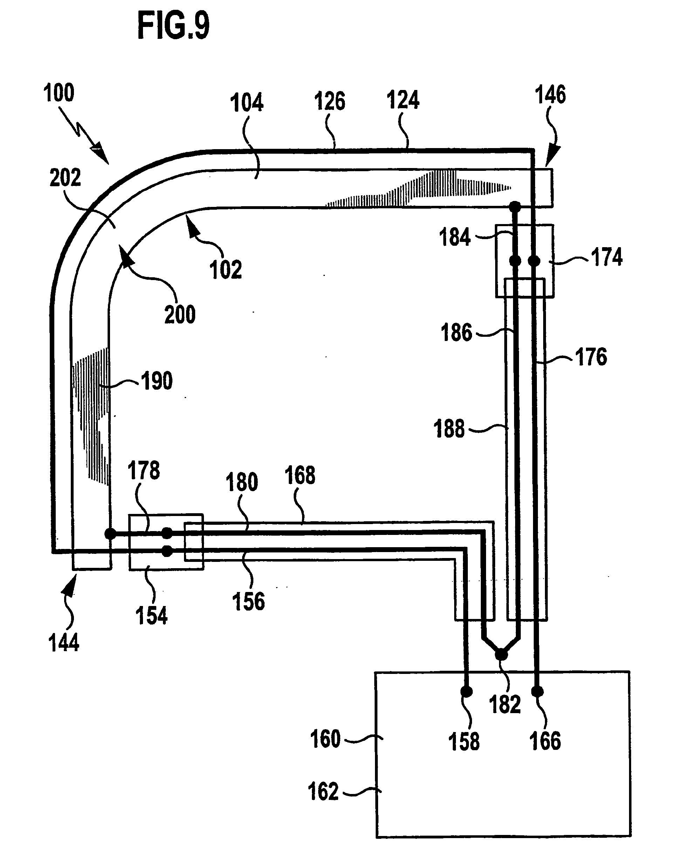

Eine in Fig. 9 dargestellte dritte Ausführungsform eines erfindungsgemäßen Transportsystems 100 unterscheidet sich von der in den Fig. 5 bis 7 dargestellten ersten Ausführungsform lediglich dadurch, daß der Fahrweg 102 nicht geradlinig ausgebildet ist, sondern eine Kurve mit einem im wesentlichen viertelkreisförmigen Fahrwegsabschnitt 200 umfaßt.

Bei dieser Ausführungsform umfaßt auch die Laufschiene 104 einen im wesentlichen viertelkreisförmig gebogenen Abschnitt 202. Durch die bogenförmige Krümmung des Fahrwegs 102 und der Laufschiene 104 liegen die Endbereiche 144 und 146 der Laufschiene 104 näher beieinander als bei der vorstehend beschriebenen ersten Ausführungsform, so daß die Länge der Zuleitungskabel 168, 188 reduziert werden kann, insbesondere dann, wenn der als Energiequelle 160 des Transportsystems 100 dienende Mittelfrequenzgenerator 162 ungefähr in der Mitte zwischen den beiden Endbereichen 144 und 146 angeordnet ist.

Wie bei der vorstehend beschriebenen zweiten Ausführungsform kann auch bei dieser Ausführungsform vorgesehen sein, daß die Laufschiene 104 in mehrere längs des Fahrwegs 102 aufeinanderfolgende Laufschienenabschnitte 194 unterteilt ist.

Im übrigen stimmt die in Fig. 9 dargestellte dritte Ausführungsform hinsichtlich Aufbau und Funktion mit der in den Fig. 5 bis 7 dargestellten ersten Ausführungsform überein, auf deren vorstehende Beschreibung insoweit Bezug genommen wird.

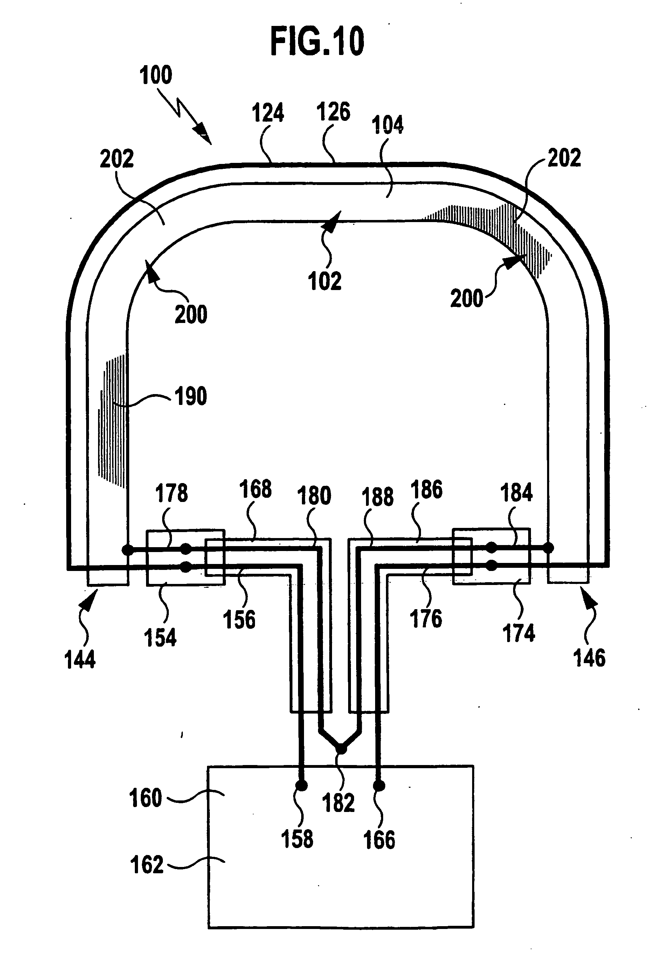

Eine in Fig. 10 dargestellte vierte Ausführungsform eines erfindungsgemäßen Transportsystems 100 unterscheidet sich von der vorstehend beschriebenen dritten Ausführungsform dadurch, daß der Fahrweg 102 nicht nur einen einzigen viertelkreisförmigen Fahrwegsabschnitt 200, sondern zwei solche viertelkreisförmigen Fahrwegsabschnitte 200 umfaßt, die gleichsinnig gekrümmt sind, so daß der Fahrweg 102 insgesamt die Form eines U aufweist.

Auch die Laufschiene 104 weist bei dieser Ausführungsform zwei gleichsinnig gekrümmte, im wesentlichen viertelkreisförmige Laufschienenabschnitte 202 auf.

Durch diese Gestaltung des Fahrwegs 102 und der Laufschiene 104 wird erreicht, daß die Endbereiche 144, 146 der Laufschiene 104 noch näher beieinander liegen als bei der dritten Ausführungsform und somit die Länge der Zuleitungskabel 168, 188 noch kürzer gehalten werden kann, insbesondere dann, wenn der als Energiequelle 160 des Transportsystems 100 dienende Mittelfrequenzgenerator 162 in der Mitte zwischen den Endbereichen 144, 146 angeordnet ist.

Im übrigen stimmt die in Fig. 10 dargestellte vierte Ausführungsform eines erfindungsgemäßen Transportsystems 100 hinsichtlich Aufbau und Funktion mit der in den Fig. 5 bis 7 dargestellten ersten Ausführungsform überein, auf deren vorstehende Beschreibung insoweit Bezug genommen wird.

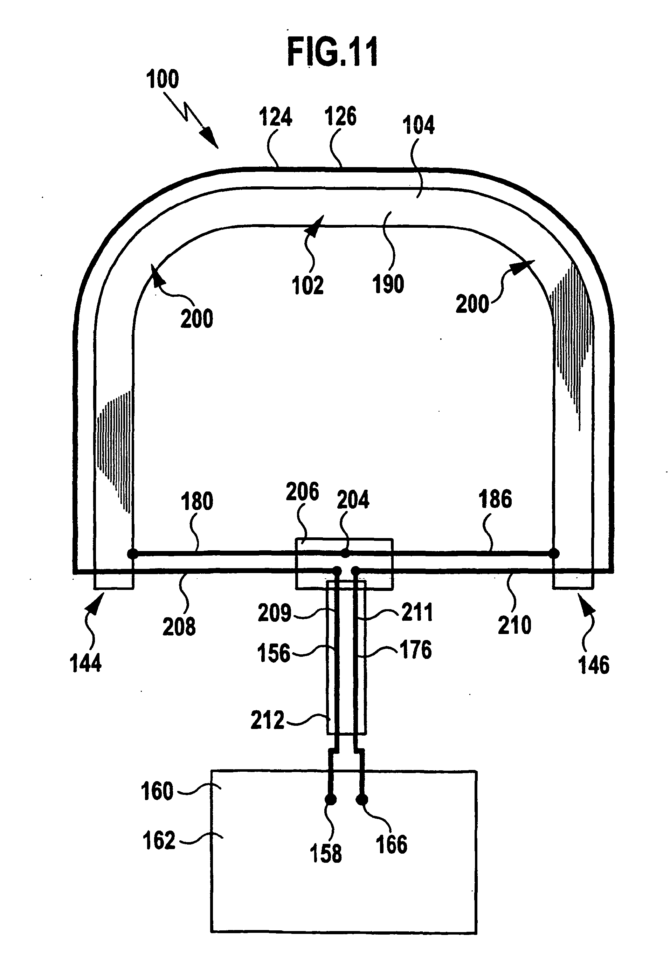

Eine in Fig. 11 dargestellte fünfte Ausführungsform eines erfindungsgemäßen Transportsystems 100 unterscheidet sich von der in Fig. 10 dargestellten vierten Ausführungsform dadurch, daß der erste Kurzschlußleiterabschnitt 180 und der zweite Kurzschlußleiterabschnitt 186 nicht an einem in der Nähe der Ausgänge 158, 166 des Mittelfrequenzgenerators 162 liegenden Kontaktstelle 182, sondern statt dessen an einer mittig zwischen den Endbereichen 144, 146 der Laufschiene 104 angeordneten Kontaktstelle 204 miteinander verbunden sind.

Die Kontaktstelle 204 ist in einem Anschlußkasten 206 angeordnet.

Der erste Endbereich 144 der Laufschiene 104 ist über den ersten Kurzschlußleiterabschnitt 180 mit der Kontaktstelle 204 verbunden. Der zweite Endbereich 146 der Laufschiene 104 ist über den zweiten Kurzschlußleiterabschnitt 186 mit der Kontaktstelle 204 verbunden.

Das im ersten Endbereich 144 der Laufschiene 104 liegende Ende des Versorgungsleiter-Fahrwegsabschnitt 124 ist über einen ersten Verbindungsabschnitt 208, der in den Anschlußkasten 206 hineingeführt ist und der nahe an dem ersten Kurzschlußleiterabschnitt 180 und im wesentlichen parallel zu demselben verläuft, an einen Unterabschnitt 209 des ersten Versorgungsleiter-Zuführabschnitts 156 angeschlossen, welcher den ersten Verbindungsabschnitt 208 mit dem ersten Ausgang 158 des als Energiequelle 160 des Transportsystems 100 dienenden Mittelfrequenzgenerators 162 verbindet.

Das im zweiten Endbereich 146 der Laufschiene 204 liegende Ende des Versorgungsleiter-Fahrwegsabschnitt 124 ist über einen zweiten Verbindungsabschnitt 210, der in den Anschlußkasten 206 geführt ist und nahe an dem zweiten Kurzschlußleiterabschnitt 186 und im wesentlichen parallel zu demselben verläuft, an einen Unterabschnitt 211 des zweiten Versorgungsleiter-Zuführabschnitts 176 angeschlossen, welcher den zweiten Verbindungsabschnitt 210 mit dem zweiten Ausgang 166 des Mittelfrequenzgenerators 162 verbindet.

Bei dieser Ausführungsform sind der Unterabschnitt 209 des ersten Versorgungsleiter-Zuführabschnitts 156 und der Unterabschnitt 211 des zweiten Versorgungsleiter-Zuführabschnitts 176 zusammen in einem mehradrigen Zuleitungskabel 212 geführt.

Bei dieser Ausführungsform können die Längen der Kurzschlußleiterabschnitte 180 und 186 auch dann kurz gehalten werden, wenn der Mittelfrequenzgenerator 162 nicht im wesentlichen mittig zwischen den Endbereichen 144, 146 der Laufschiene 104, sondern an anderer Stelle angeordnet ist.

Im übrigen stimmt die in Fig. 11 dargestellte fünfte Ausführungsform hinsichtlich Aufbau und Funktion mit der in Fig. 10 dargestellten vierten Ausführungsform des Transportsystems 100 überein, auf deren vorstehende Beschreibung insoweit Bezug genommen wird.

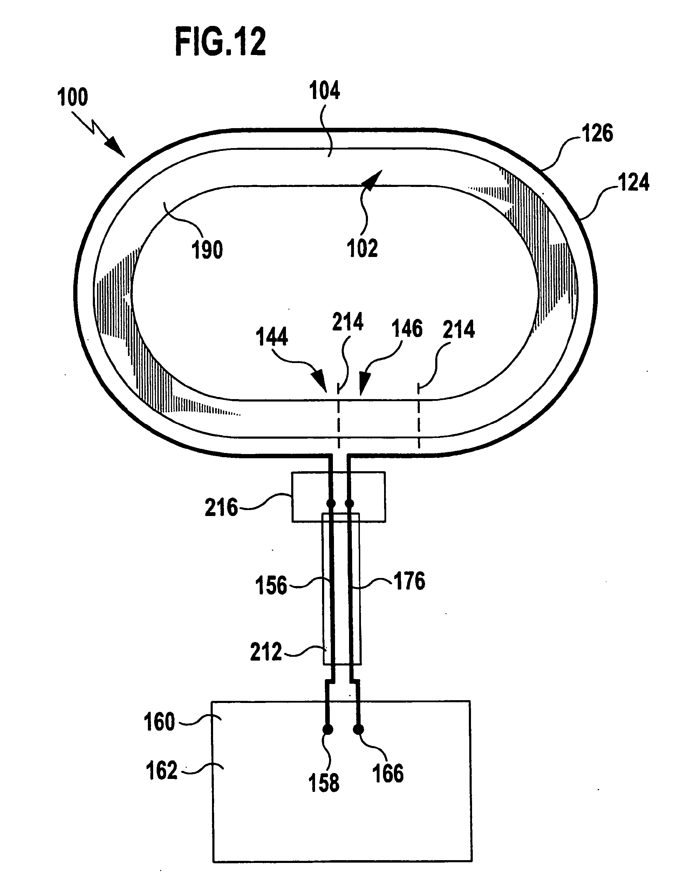

Eine in Fig. 12 dargestellte sechste Ausführungsform eines erfindungsgemäßen Transportsystems 100 unterscheidet sich von der in Fig. 11 dargestellten fünften Ausführungsform dadurch, daß der Fahrweg 102 nicht U-förmig, sondern ringförmig geschlossen ausgebildet ist.

Entsprechend ist auch die Laufschiene 104 dieser Ausführungsform ringförmig geschlossen ausgebildet.

Die ringförmig geschlossene Laufschiene 104 kann an jeder Stelle, beispielsweise an der in Fig. 12 mit 214 bezeichneten Stelle, gedanklich in einen ersten Endbereich 144 und einen zweiten Endbereich 146 unterteilt werden, welche längs der Trennfläche 214 elektrisch leitend in Kontakt stehen und somit miteinander kurzgeschlossen sind.

Bei dieser Ausführungsform ist somit kein Kurzschlußleiter 192 erforderlich, um die Endbereiche 144, 146 der als Induktionsleiter 190 dienenden Laufschiene 104 miteinander kurzzuschließen.

Der Versorgungsleiter-Fahrwegsabschnitt 124 verläuft längs des Fahrwegs 102, ist aber nicht ringförmig geschlossen. Vielmehr ist eines der Enden des Versorgungsleiter-Fahrwegsabschnitts 124 in einen Anschlußkasten 216 geführt und dort an den ersten Verbindungsleiter-Zuführabschnitt 156 angeschlossen, welcher den Versorgungsleiter-Fahrwegsabschnitt 124 mit dem ersten Ausgang 158 des als Energiequelle 160 des Transportsystems 100 dienenden Mittelfrequenzgenerators 162 verbindet.

Das andere Ende des Versorgungsleiter-Fahrwegsabschnitts 124 ist ebenfalls in den Anschlußkasten 216 geführt und dort an den zweiten Versorgungsleiter-Zuführabschnitt 176 angeschlossen, welcher den Versorgungsleiter-Fahrwegsabschnitt 124 mit dem zweiten Ausgang 166 des Mittelfrequenzgenerators 162 verbindet.

Ein Großteil des ersten Versorgungsleiter-Zuführabschnitts 156 und ein Großteil des zweiten Versorgungsleiter-Zuführabschnitts 176 sind zusammen in einem mehradrigen Zuleitungskabel 212 geführt.

Im übrigen stimmt die in Fig. 12 dargestellte sechste Ausführungsform eines Transportsystems 100 hinsichtlich Aufbau und Funktion mit der in Fig. 11 dargestellten fünften Ausführungsform überein, auf deren vorstehende Beschreibung insoweit Bezug genommen wird.

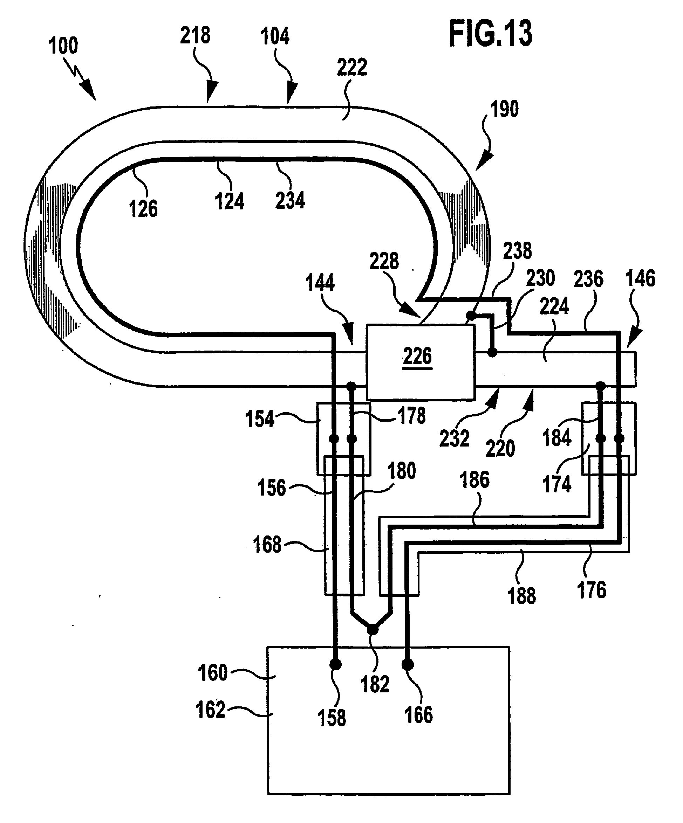

Eine in Fig. 13 dargestellte siebte Ausführungsform eines erfindungsgemäßen Transportsystems 100 unterscheidet sich von der in Fig. 10 dargestellten vierten Ausführungsform dadurch, daß der Fahrweg 102 des Transportsystems 100 nicht unverzweigt, sondern verzweigt ausgebildet ist und neben einem gekrümmten Hauptfahrwegsabschnitt 218 einen, beispielsweise linearen, Nebenfahrwegsabschnitt 220 umfaßt.

Entsprechend weist auch die Laufschiene 104 einen gekrümmten Hauptschienenabschnitt 222 und einen, beispielsweise geradlinigen, Nebenschienenabschnitt 224 auf.

Durch einen Weichenbereich 226 ist ein erster Endbereich 144 des Hauptschienenabschnitts 222 wahlweise mit dem Nebenschienenabschnitt 224 oder mit dem entgegengesetzten zweiten Endbereich 228 des Hauptschienenabschnitts 222 verbindbar.

Ein solcher Weichenbereich 226 ist an sich aus dem Stand der Technik bekannt und wird daher an dieser Stelle nicht im einzelnen beschrieben. Ein solcher Weichenbereich kann insbesondere als "aktive Weiche" mit einem beweglichen Schienenabschnitt ausgebildet sein, wie er beispielsweise aus der DE 33 02 266 C2 bekannt ist.

Wenn der Transportwagen des Transportsystems 100 zwei Energieübertragungseinheiten 138 aufweist, deren Abstand voneinander längs des Fahrwegs größer ist als die Länge des beweglichen Schienenabschnitts der Weiche, so kann auf die Verlegung eines Versorgungsleiters im Weichenbereich verzichtet werden, wie dies in der deutschen Patentanmeldung Nr. 101 59 678.2 der Dürr Automotion GmbH beschrieben ist.

Wie aus Fig. 13 zu ersehen ist, ist das zweite Ende 228 des Hauptschienenabschnitts 22 über eine Verbindungsleitung 230 mit einem an den Weichenbereich 226 angrenzenden ersten Endbereich 232 des Nebenschienenabschnitts 224 verbunden.

Der erste Endbereich 144 des Hauptschienenabschnitts 222 ist über einen ersten Verbindungsabschnitt 178, der in einen ersten Anschlußkasten 154 hineingeführt ist, an einen ersten Kurzschlußleiterabschnitt 180 angeschlossen, welcher den ersten Verbindungsabschnitt 178 mit einer Kontaktstelle 182 verbindet, die in der Nähe der Ausgänge 158 und 166 des als Energiequelle 160 des Transportsystems 100 dienenden Mittelfrequenzgenerators 162 angeordnet ist.

Der dem Weichenbereich 226 abgewandte zweite Endbereich 246 des Nebenschienenabschnitts 224 ist über einen zweiten Verbindungsabschnitt 184, der in einen zweiten Anschlußkasten 174 hineingeführt ist, an einen zweiten Kurzschlußleiterabschnitt 186 angeschlossen, welcher den zweiten Verbindungsabschnitt 184 mit der Kontaktstelle 182 verbindet.

Der Hauptschienenabschnitt 222, die Verbindungsleitung 230 und der Nebenschienenabschnitt 224 bilden somit zusammen einen Induktionsleiter 190 des Transportsystems 100, dessen Endbereiche 144, 146 mittels eines Kurzschlußleiters 192, welcher die Verbindungsabschnitte 178, 184, die Kurzschlußleiterabschnitte 180, 186 und die Kontaktstelle 182 umfaßt, miteinander kurzgeschlossen sind.

Der Versorgungsleiter-Fahrwegsabschnitt 124 der siebten Ausführungsform des Transportsystems 100 umfaßt einen Versorgungsleiter-Hauptfahrwegsabschnitt 234, welcher sich von dem ersten Endbereich 144 des Hauptschienenabschnitts 222 aus längs des Hauptschienenabschnitts 222 zu dessen zweitem Endbereich 228 erstreckt, einen Versorgungsleiter-Nebenfahrwegsabschnitt 236, der sich von dem ersten Endbereich 232 des Nebenschienenabschnitts 224 längs des Nebenschienenabschnitts 224 bis zu dessen zweitem Endbereich 146 erstreckt, und einen Versorgungsleiter-Fahrwegsverbindungsabschnitt 238, welcher ein im zweiten Endbereich 228 des Hauptschienenabschnitts 222 liegendes Ende des Versorgungsleiter-Hauptfahrwegsabschnitts 234 mit einem im ersten Endbereich 232 des Nebenschienenabschnitts 224 liegenden Ende des Versorgungsleiter-Nebenfahrwegsabschnitts 236 verbindet.

Das im ersten Endbereich 144 des Hauptschienenabschnitts 222 liegende Ende des Versorgungsleiter-Hauptfahrwegsabschnitts 234 ist in den ersten Anschlußkasten 154 hineingeführt und dort an einen ersten Verbindungsleiter-Zuführabschnitt 156 angeschlossen, welcher den Versorgungsleiter-Hauptfahrwegsabschnitt 234 mit einem ersten Ausgang 158 des Mittelfrequenzgenerators 162 verbindet.

Das im zweiten Endbereich 146 des Nebenschienenabschnitts 224 liegende Ende des Versorgungsleiter-Nebenfahrwegsabschnitts 236 ist in den zweiten Anschlußkasten 174 hineingeführt und dort an einen zweiten Versorgungsleiter-Zuführabschnitt 176 angeschlossen, welcher den Versorgungsleiter-Nebenfahrwegsabschnitt 236 mit einem zweiten Ausgang 166 des Mittelfrequenzgenerators 162 verbindet.

Ein Großteil des ersten Versorgungsleiter-Zuführabschnitts 156 und ein Großteil des ersten Kurzschlußleiterabschnitts 180 sind zusammen in einem mehradrigen ersten Zuleitungskabel 168 geführt.

Ein Großteil des zweiten Versorgungsleiter-Zuführabschnitts 176 und ein Großteil des zweiten Kurzschlußleiterabschnitts 186 sind zusammen in einem mehradrigen zweiten Zuleitungskabel 188 geführt.

Durch den vom Mittelfrequenzgenerator 162 in den Verbindungsleiter 126 des Transportsystems 100 eingespeisten Wechselstrom wird in dem Induktionsleiter 190 des Transportsystems 100, welcher mittels des Kurzschlußleiters 192 kurzgeschlossen ist, ein Induktionsstrom erzeugt, der eine kleinere Amplitude aufweist als der in den Versorgungsleiter 126 eingeprägte Strom.

Im übrigen stimmt die in Fig. 13 dargestellte siebte Ausführungsform des erfindungsgemäßen Transportsystems 100 hinsichtlich Aufbau und Funktion mit der in Fig. 10 dargestellten vierten Ausführungsform überein, auf deren vorstehende Beschreibung insoweit Bezug genommen wird.

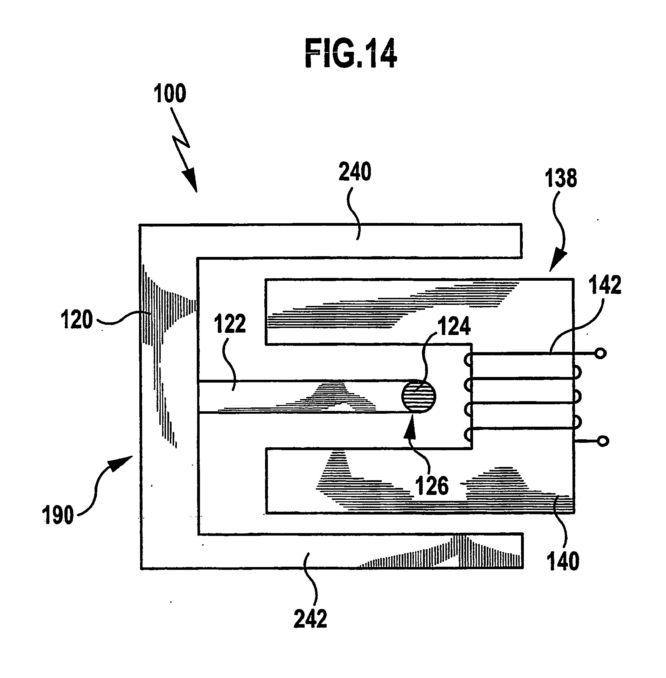

Eine in Fig. 14 dargestellte achte Ausführungsform des erfindungsgemäßen Transportsystems 100 unterscheidet sich von den vorstehend beschriebenen ersten bis siebten Ausführungsformen dadurch, daß nicht eine Laufschiene 104 des Transportsystems 100 als der Induktionsleiter 190 verwendet wird, sondern der Induktionsleiter 190 als ein von der Laufschiene 104 verschiedenes, separates Element des Transportsystems 100 ausgebildet ist.

Wie aus Fig. 14 zu ersehen ist, kann der Induktionsleiter insbesondere als ein sich längs des Fahrwegs 102 erstreckendes Profilelement mit einem im wesentlichen U-förmigen Querschnitt ausgebildet sein, welches aus einem elektrisch leitenden, nicht-ferromagnetischen Material, insbesondere aus Aluminium oder einer Aluminiumlegierung, hergestellt ist.

Ein oberer Schenkel 240 und ein unterer Schenkel 242 des Induktionsleiters sind durch einen Steg 120 miteinander verbunden.

Von einer Seitenwand des Steges 120 aus steht ein aus einem elektrisch isolierenden Material gebildeter Versorgungsleiterträger 122 ab, welcher an seinem dem Steg 120 abgewandten Ende den Versorgungsleiter-Fahrwegsabschnitt 124 des Versorgungsleiters 126 trägt.

Wie aus Fig. 14 zu ersehen ist, ist bei dieser Ausführungsform der Versorgungsleiter-Fahrwegsabschnitt 124 im wesentlichen mittig zwischen den beiden Schenkeln 240, 242 des Induktionsleiters 190 angeordnet, was zu einer besonders niedrigen Induktivität der den Versorgungsleiter-Fahrwegsabschnitt 124 und den Induktionsleiter 190 umfassenden Leiteranordnung führt.

Der im wesentlichen U-förmige Stromabnehmer 140 der Energieübertragungseinheit 138 des Transportwagens taucht in den Bereich zwischen den beiden Schenkeln 240, 242 des Induktionsleiters 190 ein und umgibt den Versorgungsleiter-Fahrwegsabschnitt 124, ohne denselben zu berühren.

Der Stromabnehmer, der als U-förmiger Ferritkern gestaltet ist, trägt eine Leiterwicklung 142, die mit einer (in Fig. 14 nicht dargestellten) Stromabnehmer-Elektronikschaltung zur Wandlung eines in der Leiterwicklung 142 induzierten Wechselstromes in eine Gleichspannung verbunden ist.

Die (nicht dargestellten) Tragrollen und Führungsrollen des Transportwagens des Transportsystems 100 rollen bei dieser Ausführungsform nicht am Induktionsleiter 190, sondern an einer oder mehreren (nicht dargestellten) vom Induktionsleiter 190 verschiedenen und separat ausgebildeten Schienen ab.

Im übrigen stimmt die in Fig. 14 dargestellte Ausführungsform des erfindungsgemäßen Transportsystems 100 hinsichtlich Aufbau und Funktion mit den in den Fig. 5 bis 13 beschriebenen Ausführungsformen überein, auf deren vorstehende Beschreibung insoweit Bezug genommen wird.

Insbesondere kann der Induktionsleiter 190 bei der achten Ausführungsform ebenso wie bei den vorstehenden Ausführungsformen in mehrere Induktionsleiterabschnitte unterteilt sein und/oder einen gekrümmten Verlauf aufweisen. Ebenso können der Versorgungsleiter 126 und der Kurzschlußleiter 192 bei der achten Ausführungsform ebenso ausgebildet sein wie bei irgendeiner der vorstehend beschriebenen ersten bis siebten Ausführungsformen.

## Patentansprüche

1. Transportsystem, umfassend ein Leitersystem (170), das mindestens einen Versorgungsleiter (126) umfasst, welcher mit einer Energiequelle (160) verbunden ist, mindestens einen relativ zu dem Leitersystem (170) längs eines Fahrwegs (102) beweglichen Transportwagen und mindestens eine Einrichtung (138) zur berührungslosen Übertragung von Energie von dem Leitersystem (170) zu dem Transportwagen,
wobei der Versorgungsleiter (126) einen Versorgungsleiter-Fahrwegsabschnitt (124) umfasst, der im wesentlichen längs des Fahrweges (102) verläuft,
wobei das Transportsystem (100) mindestens einen Induktionsleiter (190) umfasst, der zumindest abschnittsweise so benachbart zu dem Versorgungsleiter (126) angeordnet ist, dass ein in dem Versorgungsleiter (126) fließender elektrischer Strom einen Induktionsstrom in dem Induktionsleiter (190) erzeugt, und
wobei der Induktionsleiter (190) mindestens zwei Endbereiche (144, 146) aufweist, die miteinander kurzgeschlossen sind, und/oder wobei der Induktionsleiter (190) ringförmig geschlossen ausgebildet ist,
**dadurch gekennzeichnet, dass** der Induktionsleiter (190) zumindest abschnittsweise längs des Versorgungsleiter-Fahrwegsabschnitts (124) verläuft.

2. Transportsystem nach Anspruch 1, **dadurch gekennzeichnet, dass** zwei Endbereiche (144, 146) des Induktionsleiters (190) mittels eines Kurzschlussleiters (192) miteinander kurzgeschlossen sind.

3. Transportsystem nach Anspruch 2, **dadurch gekennzeichnet, dass** der Versorgungsleiter (126) einen ersten Versorgungsleiter-Zuführabschnitt (156) umfasst, der den Versorgungsleiter-Fahrwegsabschnitt (124) mit einem ersten Ausgang (158) der Energiequelle (160) verbindet.

4. Transportsystem nach Anspruch 3, **dadurch gekennzeichnet, dass** der Kurzschlussleiter (192) einen ersten Kurzschlussleiterabschnitt (180) umfasst, der zumindest abschnittsweise längs des ersten Versorgungsleiter-Zuführabschnitts (156) verläuft.

5. Transportsystem nach Anspruch 4, **dadurch gekennzeichnet, dass** der erste Versorgungsleiter-Zuführabschnitt (156) und der erste Kurzschlussleiterabschnitt (180) zumindest abschnittsweise zusammen in einem mehradrigen Zuleitungskabel (168) geführt sind.

6. Transportsystem nach Anspruch 5, **dadurch gekennzeichnet, dass** der erste Versorgungsleiter-Zuführabschnitt (156) in mindestens zwei Adern des mehradrigen Zuleitungskabels (168) geführt ist und dass der erste Kurzschlussleiterabschnitt (180) in mindestens einer Ader des mehradrigen Zuleitungskabels (168) geführt ist, welche - in der Umfangsrichtung des Zuleitungskabels (168) gesehen - zwischen den zwei Adern angeordnet ist, in welchen der erste Versorgungsleiter-Zuführabschnitt (156) geführt ist.

7. Transportsystem nach einem der Ansprüche 5 oder 6, **dadurch gekennzeichnet, dass** der erste Kurzschlussleiterabschnitt (180) in mindestens zwei Adern des mehradrigen Zuleitungskabels (168) geführt ist und dass der erste Versorgungsleiter-Zuführabschnitt (156) in mindestens einer Ader des mehradrigen Zuleitungskabels (168) geführt ist, welche - in der Umfangsrichtung des Zuleitungskabels (168) gesehen - zwischen den zwei Adern angeordnet ist, in welchen der erste Kurzschlussleiterabschnitt (180) geführt ist.

8. Transportsystem nach einem der Ansprüche 3 bis 7, **dadurch gekennzeichnet, dass** der Versorgungsleiter (126) einen zweiten Versorgungsleiter-Zuführabschnitt (176) umfasst, der den Versorgungsleiter-Fahrwegsabschnitt (124) mit einem zweiten Ausgang (166) der Energiequelle (160) verbindet.

9. Transportsystem nach Anspruch 8, **dadurch gekennzeichnet, dass** der Kurzschlussleiter (192) einen zweiten Kurzschlussleiterabschnitt (186) umfasst, der zumindest abschnittsweise längs des zweiten Versorgungsleiter-Zuführabschnitts (176) verläuft.

10. Transportsystem nach Anspruch 9, **dadurch gekennzeichnet, dass** der zweite Versorgungsleiter-Zuführabschnitt (176) und der zweite Kurzschlussleiterabschnitt (186) zumindest abschnittsweise zusammen in einem mehradrigen Zuleitungskabel (188) geführt sind.

11. Transportsystem nach Anspruch 10, **dadurch gekennzeichnet, dass** der zweite Versorgungsleiter-Zuführabschnitt (176) in mindestens zwei Adern des mehradrigen Zuleitungskabels (188) geführt ist und dass der zweite Kurzschlussleiterabschnitt (186) in mindestens einer Ader des mehradrigen Zuleitungskabels (188) geführt ist, welche - in der Umfangsrichtung des Zuleitungskabels (188) gesehen - zwischen den zwei Adern angeordnet ist, in welchen der zweite Versorgungsleiter-Zuführabschnitt (176) geführt ist.

12. Transportsystem nach einem der Ansprüche 10 oder 11, **dadurch gekennzeichnet, dass** der zweite Kurzschlussleiterabschnitt (186) in mindestens zwei Adern des mehradrigen Zuleitungskabels (188) geführt ist und dass der zweite Versorgungsleiter-Zuführabschnitt (176) in mindestens einer Ader des mehradrigen Zuleitungskabels (188) geführt ist, welche - in der Umfangsrichtung des Zuleitungskabels (188) gesehen - zwischen den zwei Adern angeordnet ist, in welchen der zweite Kurzschlussleiterabschnitt (186) geführt ist.

13. Transportsystem nach einem der Ansprüche 9 bis 12, **dadurch gekennzeichnet, dass** der erste Kurzschlussleiterabschnitt (180) und der zweite Kurzschlussleiterabschnitt (186) in der Nähe der Energiequelle (160) miteinander verbunden sind.

14. Transportsystem nach einem der Ansprüche 2 bis 12, **dadurch gekennzeichnet, dass** der Kurzschlussleiter (192) einen ersten Kurzschlussleiterabschnitt (180) und einen zweiten Kurzschlussleiterabschnitt (186) umfasst, welche an einer von der Energiequelle (160) entfernten Kontaktstelle (204) miteinander verbunden sind.

15. Transportsystem nach Anspruch 14, **dadurch gekennzeichnet, dass** der Versorgungsleiter (126) einen ersten Versorgungsleiter-Zuführabschnitt (156) mit einem Unterabschnitt (209) umfasst, der vom Bereich der Kontaktstelle (204) zu einem ersten Ausgang (158) der Energiequelle (160) verläuft.

16. Transportsystem nach einem der Ansprüche 14 oder 15, **dadurch gekennzeichnet, dass** der Versorgungsleiter (126) einen zweiten Versorgungsleiter-Zuführabschnitt (176) mit einem Unterabschnitt (211) umfasst, der vom Bereich der Kontaktstelle (204) zu einem zweiten Ausgang (166) der Energiequelle (160) verläuft.

17. Transportsystem nach einem der Ansprüche 15 oder 16, **dadurch gekennzeichnet, dass** der Unterabschnitt des ersten Versorgungsleiter-Zuführabschnitts (156) und der Unterabschnitt des zweiten Versorgungsleiter-Zuführabschnitts (176) zumindest abschnittsweise zusammen in einem mehradrigen Zuleitungskabel (212) geführt sind.

18. Transportsystem nach einem der Ansprüche 1 bis 17, **dadurch gekennzeichnet, dass** der Induktionsleiter (190) mehrere Induktlonsleiterabschnitte (198) umfasst, die jeweils mindestens zwei Endbereiche aufweisen, wobei mindestens ein Endbereich eines ersten Induktionsleiterabschnitts (198) mit mindestens einem Endbereich eines zweiten Induktionsleiterabschnitts (198) elektrisch leitend verbunden ist.

19. Transportsystem nach Anspruch 18, **dadurch gekennzeichnet, dass** der mindestens eine Endbereich des ersten Induktionsleiterabschnitts (198) mit dem mindestens einen Endbereich des zweiten Induktionsleiterabschnitts (198) über eine separate Verbindungsleitung (196) elektrisch leitend verbunden ist.

20. Transportsystem nach einem der Ansprüche 18 oder 19, **dadurch gekennzeichnet, dass** der mindestens eine Endbereich des ersten Induktionsleiterabschnitts (198) mit dem mindestens einen Endbereich des zweiten Induktionsleiterabschnitts (198) über eine elektrisch leitende Halterung elektrisch leitend verbunden ist.

21. Transportsystem nach einem der Ansprüche 18 bis 20, **dadurch gekennzeichnet, dass** jeder Endbereich jedes Induktionsleiterabschnitts (198) elektrisch leitend mit mindestens einem Endbereich desselben Induktionsleiterabschnitts (198) oder eines anderen Induktionsleiterabschnitts (198) verbunden ist.

22. Transportsystem nach einem der Ansprüche 1 bis 21, **dadurch gekennzeichnet, dass** der Induktionsleiter (190) und der Versorgungsleiter (126) galvanisch voneinander getrennt sind.

23. Transportsystem nach einem der Ansprüche 1 bis 22, **dadurch gekennzeichnet, dass** der Induktionsleiter (190) ein Element umfasst, das zumindest abschnittsweise als ein Profilelement ausgebildet ist.

24. Transportsystem nach Anspruch 23, **dadurch gekennzeichnet, dass** das Profilelement zumindest abschnittsweise einen im wesentlichen U-förmigen Querschnitt oder einen im wesentlichen doppel-T-förmigen Querschnitt aufweist.

25. Transportsystem nach einem der Ansprüche 1 bis 24, **dadurch gekennzeichnet, dass** der Induktionsleiter (190) ein Element umfasst, das zumindest abschnittsweise als eine Laufschiene (104) ausgebildet ist, an welcher der Transportwagen des Transportsystems (100) angeordnet ist.

26. Transportsystem nach einem der Ansprüche 1 bis 25, **dadurch gekennzeichnet, dass** der Induktionsleiter (190) ein Element umfasst, das zumindest abschnittsweise aus Aluminium oder einer Aluminiumlegierung gebildet ist.

27. Transportsystem nach einem der Ansprüche 1 bis 26, **dadurch gekennzeichnet, dass** das Leitersystem (170) des Transportsystems (100) keinen Rückleiter (150) aufweist.

28. Transportsystem nach einem der Ansprüche 1 bis 27, **dadurch gekennzeichnet, dass** die Energiequelle (160) einen Mittelfrequenzgenerator (162) umfasst.

## Claims

1. Transport system comprising a conductor system (170), which comprises at least one supply conductor (126), which is connected to an energy source (160), at least one transport carriage movable along a travel path (102) relative to the conductor system (170) and at least one means (138) for the non-contact transmission of energy from the conductor system (170) to the transport carriage, wherein the supply conductor (126) comprises a supply conductor travel path section (124), which runs substantially along the travel path (102),
wherein the transport system (100) comprises at least one induction conductor (190), which at least in sections is arranged so closely adjacent to the supply conductor (126) that an electric current flowing in the supply conductor (126) generates an induction current in the induction conductor (190), and
wherein the induction conductor (190) has at least two end regions (144, 146), which are short-circuited to one another, and/or wherein the induction conductor (190) is closed in a ring shape,
**characterised in that** the induction conductor (190) runs along the supply conductor travel path section (124) at least in sections.

2. Transport system according to Claim 1, **characterised in that** two end regions (144, 146) of the induction conductor (190) are short-circuited to one another by means of a short-circuit conductor (192).

3. Transport system according to Claim 2, **characterised in that** the supply conductor (126) comprises a first supply conductor feed section (156), which connects the supply conductor travel path section (124) to a first output (158) of the energy source (160).

4. Transport system according to Claim 3, **characterised in that** the short-circuit conductor (192) comprises a first short-circuit conductor section (180), which runs along the first supply conductor feed section (156) at least in sections.

5. Transport system according to Claim 4, **characterised in that** the first supply conductor feed section (156) and the first short-circuit conductor section (180) are run together in a multicore supply cable (168) at least in sections.

6. Transport system according to Claim 5, **characterised in that** the first supply conductor feed section (156) is run in at least two wires of the multicore supply cable (168), and that the first short-circuit conductor section (180) is run in at least one wire of the multicore supply cable (168), which - viewed in the peripheral direction of the supply cable (168) - is arranged between the two wires, in which the first supply conductor feed section (156) is run.

7. Transport system according to one of Claims 5 or 6, **characterised in that** the first short-circuit conductor section (180) is run in at least two wires of the multicore supply cable (168), and that the first supply conductor feed section (156) is run in at least one wire of the multicore supply cable (168), which - viewed in the peripheral direction of the supply cable (168) - is arranged between the two wires, in which the first short-circuit conductor section (180) is run.

8. Transport system according to one of Claims 3 to 7, **characterised in that** the supply conductor (126) comprises a second supply conductor feed section (176), which connects the supply conductor travel path section (124) to a second output (166) of the energy source (160).

9. Transport system according to Claim 8, **characterised in that** the short-circuit conductor (192) comprises a second short-circuit conductor section (186), which runs along the second supply conductor feed section (176) at least in sections.

10. Transport system according to Claim 9, **characterised in that** the second supply conductor feed section (176) and the second short-circuit conductor section (186) are run together in a multicore supply cable (188) at least in sections.

11. Transport system according to Claim 10, **characterised in that** the second supply conductor feed section (176) is run in at least two wires of the multicore supply cable (188), and that the second short-circuit conductor section (186) is run in at least one wire of the multicore supply cable (188), which - viewed in the peripheral direction of the supply cable (188) - is arranged between the two wires, in which the second supply conductor feed section (176) is run.

12. Transport system according to one of Claims 10 or 11, **characterised in that** the second short-circuit conductor section (186) is run in at least two wires of the multicore supply cable (188), and that the second supply conductor feed section (176) is run in at least one wire of the multicore supply cable (188), which - viewed in the peripheral direction of the supply cable (188) - is arranged between the two wires, in which the second supply conductor section (186) is run.

13. Transport system according to one of Claims 9 to 12, **characterised in that** the first short-circuit conductor section (180) and the second short-circuit conductor section (186) are connected to one another in the vicinity of the energy source (160).

14. Transport system according to one of Claims 2 to 12, **characterised in that** the short-circuit conductor (192) comprises a first short-circuit conductor section (180) and a second short-circuit conductor section (186), which are connected to one another at a contact point (204) remote from the energy source (160).

15. Transport system according to Claim 14, **characterised in that** the supply conductor (126) comprises a first supply conductor feed section (156) with a lower section (209), which runs from the region of the contact point (204) to a first output (158) of the energy source (160).

16. Transport system according to one of Claims 14 or 15, **characterised in that** the supply conductor (126) comprises a second supply conductor feed section (176) with a lower section (211), which runs from the region of the contact point (204) to a second output (166) of the energy source (160).

17. Transport system according to one of Claims 15 or 16, **characterised in that** the lower section of the first supply conductor feed section (156) and the lower section of the second supply conductor feed section (176) are run together in a multicore supply cable (212) at least in sections.

18. Transport system according to one of Claims 1 to 17, **characterised in that** the induction conductor (190) comprises a plurality of induction conductor sections (198), which respectively have at least two end regions, wherein at least one end region of a first induction conductor section (198) is electrically conductively connected to at least one end region of a second induction conductor section (198).

19. Transport system according to Claim 18, **characterised in that** the at least one end region of the first induction conductor section (198) is electrically conductively connected to the at least one end region of the second induction conductor section (198) via a separate connection line (196).

20. Transport system according to one of Claims 18 or 19, **characterised in that** the at least one end region of the first induction conductor section (198) is electrically conductively connected to the at least one end region of the second induction conductor section (198) via an electrically conductive mounting.

21. Transport system according to one of Claims 18 to 20, **characterised in that** each end region of each induction conductor section (198) is electrically conductively connected to at least one end region of the same induction conductor section (198) or another induction conductor section (198).

22. Transport system according to one of Claims 1 to 21, **characterised in that** the induction conductor (190) and the supply conductor (126) are electrically separated from one another.

23. Transport system according to one of Claims 1 to 22, **characterised in that** the induction conductor (190) comprises an element, which is configured at least in sections as a profile element.

24. Transport system according to Claim 23, **characterised in that** at least in sections the profile element has a substantially U-shaped cross-section or an essentially double-T-shaped cross-section.

25. Transport system according to one of Claims 1 to 24, **characterised in that** the induction conductor (190) comprises an element, which is configured at least in sections as a travel rail (104), on which the transport carriage of the transport system (100) is arranged.

26. Transport system according to one of Claims 1 to 25, **characterised in that** the induction conductor (190) comprises an element, which at least in sections is formed from aluminium or an aluminium alloy.

27. Transport system according to one of Claims 1 to 26, **characterised in that** the conductor system (170) of the transport system (100) has no return conductor (150).

28. Transport system according to one of Claims 1 to 27, **characterised in that** the energy source (160) comprises a medium frequency generator (162).

## Revendications

1. Système de transport comportant un système de conducteurs (170), qui comprend au moins un conducteur d'alimentation (126), lequel est relié à une source d'énergie (160), au moins un véhicule de transport mobile le long d'une voie (102) par rapport au système de conducteurs (170) et au moins un dispositif (138) de transmission sans contact d'énergie du système de conducteurs (170) au véhicule de transport, sachant que le conducteur d'alimentation (126) comprend un tronçon de circulation (124) qui s'étend sensiblement le long de la voie (102),
◆ sachant que le système de transport (100) comprend au moins un conducteur inductif (190) qui est disposé, au moins en partie, de manière adjacente au conducteur d'alimentation (126) de sorte qu'un courant électrique parcourant le conducteur d'alimentation (126) produit un courant induit dans le conducteur inductif (190) et
◆ sachant que le conducteur inductif (190) comporte au moins deux zones d'extrémité (144, 146) qui sont mises en court-circuit l'une avec l'autre, et/ou sachant que le conducteur inductif (190) est fermé en anneau,
**caractérisé en ce que** le conducteur inductif (190) s'étend, au moins en partie, le long du tronçon de circulation (124) du conducteur d'alimentation.

2. Système de transport selon la revendication 1, **caractérisé en ce que** deux zones d'extrémité (144, 146) du conducteur inductif (190) sont mises en court-circuit l'une avec l'autre au moyen d'un conducteur de court-circuit (192).

3. Système de transport selon la revendication 2, **caractérisé en ce que** le conducteur d'alimentation (126) comprend un premier tronçon d'amenée (156) qui relie le tronçon de circulation (124) à une première sortie (158) de la source d'énergie (160).

4. Système de transport selon la revendication 3, **caractérisé en ce que** le conducteur de court-circuit (192) comporte un premier tronçon (180) qui s'étend, au moins en partie, le long du premier tronçon d'amenée (156) de conducteur d'alimentation.

5. Système de transport selon la revendication 4, **caractérisé en ce que** le premier tronçon d'amenée (156) de conducteur d'alimentation et le premier tronçon (180) de conducteur de court-circuit sont posés, au moins en partie, conjointement dans un câble d'amenée à plusieurs fils (168).

6. Système de transport selon la revendication 5, **caractérisé en ce que** le premier tronçon d'amenée (156) du conducteur d'alimentation est posé dans au moins deux fils du câble d'amenée à plusieurs fils (168) et **en ce que** le premier tronçon (180) de conducteur de court-circuit est posé dans au moins un fil du câble d'amenée à plusieurs fils (168), lequel, si l'on regarde dans le sens circonférentiel du câble d'amenée (168), est disposé entre les deux fils dans lesquels est posé le premier tronçon d'amenée (156) de conducteur d'alimentation.

7. Système de transport selon l'une quelconque des revendications 5 ou 6, **caractérisé en ce que** le premier tronçon (180) de conducteur de court-circuit est posé dans au moins deux fils du câble d'amenée à plusieurs fils (168) et **en ce que** le premier tronçon d'amenée (156) de conducteur d'alimentation est posé dans au moins un fil du câble d'amenée à plusieurs fils (168), lequel, si l'on regarde dans le sens circonférentiel du câble d'amenée (168), est disposé entre les deux fils dans lesquels est posé le premier tronçon (180) de conducteur de court-circuit.

8. Système de transport selon l'une quelconque des revendications 3 à 7, **caractérisé en ce que** le conducteur d'alimentation (126) comprend un second tronçon d'amenée (176) qui relie le tronçon de circulation (124) de conducteur d'alimentation à une seconde sortie (166) de la source d'énergie (160).

9. Système de transport selon la revendication 8, **caractérisé en ce que** le conducteur de court-circuit (192) comporte un second tronçon (186) qui s'étend, au moins en partie, le long du second tronçon d'amenée (176) de conducteur d'alimentation.

10. Système de transport selon la revendication 9, **caractérisé en ce que** le second tronçon d'amenée (176) de conducteur d'alimentation et le second tronçon (186) de conducteur de court-circuit sont posés, au moins en partie, conjointement dans un câble d'amenée (188) à plusieurs fils.

11. Système de transport selon la revendication 10, **caractérisé en ce que** le second tronçon d'amenée (176) de conducteur d'alimentation est posé dans au moins deux fils du câble d'alimentation à plusieurs fils (188) et **en ce que** le second tronçon (186) de conducteur de court-circuit est posé dans au moins un fil du câble d'amenée à plusieurs fils (188), lequel, si l'on regarde dans le sens circonférentiel du câble d'amenée (188), est disposé entre les deux fils dans lesquels est posé le second tronçon d'amenée (176) de conducteur d'alimentation.

12. Système de transport selon l'une quelconque des revendications 10 ou 11, **caractérisé en ce que** le second tronçon (186) de conducteur de court-circuit est posé dans au moins deux fils du câble d'alimentation à plusieurs fils (188) et **en ce que** le second tronçon d'amenée (176) de conducteur d'alimentation est posé dans au moins un fil du câble d'amenée à plusieurs fils (188), lequel, si l'on regarde dans le sens circonférentiel du câble d'amenée (188), est disposé entre les deux fils dans lesquels est posé le second tronçon (186) de conducteur de court-circuit.

13. Système de transport selon l'une quelconque des revendications 9 à 12, **caractérisé en ce que** le premier tronçon (180) de conducteur de court-circuit et le second tronçon (186) de conducteur de court-circuit sont reliés à proximité de la source d'énergie (160).

14. Système de transport selon l'une quelconque des revendications 2 à 12, **caractérisé en ce que** le conducteur de court-circuit (192) comprend un premier tronçon (180) et un second tronçon (186), lesquels sont reliés au niveau d'un point de contact (204) éloigné de la source d'énergie (160).

15. Système de transport selon la revendication 14, **caractérisé en ce que** le conducteur d'alimentation (126) comporte un premier tronçon d'amenée (156) avec un tronçon secondaire (209) qui s'étend de la zone du point de contact (204) à une première sortie (158) de la source d'énergie (160).

16. Système de transport selon l'une quelconque des revendications 14 ou 15, **caractérisé en ce que** le conducteur d'alimentation (126) comporte un second tronçon d'amenée (176) avec un tronçon secondaire (211) qui s'étend de la zone du point de contact (204) à une seconde sortie (166) de la source d'énergie (160).

17. Système de transport selon l'une quelconque des revendications 15 ou 16, **caractérisé en ce que** le tronçon secondaire du premier tronçon d'amenée (156) de conducteur d'alimentation et le tronçon secondaire du second tronçon d'amenée (176) de conducteur d'alimentation sont posés conjointement, au moins en partie, dans un câble d'amenée à plusieurs fils (212).

18. Système de transport selon l'une quelconque des revendications 1 à 17, **caractérisé en ce que** le conducteur inductif (190) comprend plusieurs tronçons (198) qui comportent chacun au moins deux zones d'extrémité, sachant qu'au moins une zone d'extrémité d'un premier tronçon (198) de conducteur inductif est reliée, de manière conductrice d'électricité, à au moins une zone d'extrémité d'un second tronçon (198) de conducteur inductif.

19. Système de transport selon la revendication 18, **caractérisé en ce que** la zone d'extrémité minimale du premier tronçon (198) de conducteur inductif est reliée, de manière conductrice d'électricité, à la zone d'extrémité minimale du second tronçon (198) de conducteur inductif par le biais d'un circuit de jonction séparé (196).

20. Système de transport selon l'une quelconque des revendications 18 ou 19, **caractérisé en ce que** la zone d'extrémité minimale du premier tronçon (198) de conducteur inductif est reliée, de manière conductrice d'électricité, à la zone d'extrémité minimale du second tronçon (198) de conducteur inductif par le biais d'une fixation conductrice d'électricité.

21. Système de transport selon l'une quelconque des revendications 18 à 20, **caractérisé en ce que** chaque zone d'extrémité de chaque tronçon (198) de conducteur inductif est reliée, de manière conductrice d'électricité, à au moins une zone d'extrémité de ce même tronçon (198) de conducteur inductif ou d'un autre tronçon (198) de conducteur inductif.

22. Système de transport selon l'une quelconque des revendications 1 à 21, **caractérisé en ce que** le conducteur inductif (190) et le conducteur d'alimentation (126) sont isolés l'un de l'autre par la technique de galvanisation.

23. Système de transport selon l'une quelconque des revendications 1 à 22, **caractérisé en ce que** le conducteur inductif (190) comporte un élément qui est réalisé, au moins en partie, sous forme d'élément profilé.

24. Système de transport selon la revendication 23, **caractérisé en ce que** l'élément profilé présente, au moins en partie, une coupe transversale sensiblement en forme de U ou une coupe transversale sensiblement en forme de double T.

25. Système de transport selon l'une quelconque des revendications 1 à 24, **caractérisé en ce que** le conducteur inductif (190) comporte un élément qui est réalisé, au moins en partie, sous forme de rail de roulement (104) sur lequel est disposé le véhicule de transport du système de transport (100).

26. Système de transport selon l'une quelconque des revendications 1 à 25, **caractérisé en ce que** le conducteur inductif (190) comporte un élément qui est réalisé, au moins en partie, en aluminium ou dans un alliage d'aluminium.

27. Système de transport selon l'une quelconque des revendications 1 à 26, **caractérisé en ce que** le système de conducteurs (170) du système de transport (100) ne comporte aucun conducteur de retour (150).

28. Système de transport selon l'une quelconque des revendications 1 à 27, **caractérisé en ce que** la source d'énergie (160) comporte un générateur à moyenne fréquence (162).
